# EUROPEAN PATENT APPLICATION

(11) **EP 4 836 536 A1**
(43) Date of publication of application: **04.11.2026**
(21) Application number: 24910256.7
(22) Date of filing: 28.10.2024
(51) Int. Cl.: H04W 52/02

(54) **COMMUNICATION METHOD, APPARATUS AND SYSTEM**

(30) Priority: 29.12.2023 CN 202311865967
(71) Applicant: Huawei Technologies Co., Ltd., Shenzhen, Guangdong 518129 (CN)
(72) Inventor: LI, Lun, Shenzhen, Guangdong 518129 (CN); LI, Meng, Shenzhen, Guangdong 518129 (CN); WU, Yizhuang, Shenzhen, Guangdong 518129 (CN); SCHRAMM, Mirko, Shenzhen, Guangdong 518129 (CN); SPINI, Marco, Shenzhen, Guangdong 518129 (CN); FU, Zhang, Shenzhen, Guangdong 518129 (CN)
(74) Representative: Gill Jennings & Every LLP
(86) International application number: PCT/CN2024/127837
(87) International publication number: WO 2025/139316

(57) **Abstract**

The embodiments of this application provide a communication method, apparatus, and system. The method includes: sending, by a first network element, a query message, wherein the query message is used to query energy consumption information of a second network element used for transmitting data, and the data includes data related to a terminal device; receiving, by the first network element, a response to the query message, wherein the response includes an index, and the index indicates a relationship between the energy consumption of the second network element used for transmitting the data and the data; and obtaining, by the first network element according to the index, the energy consumption of the second network element used for transmitting the data. Based on this method, the first network element can further understand, from the perspective of energy consumption, the data transmission situation of the terminal device, and can also perform corresponding processing, which is beneficial to the data transmission of the terminal device.

## Description

### CROSS-REFERENCE TO RELATED APPLICATIONS

This application claims priority to Chinese Patent Application No. 202311865967.1, filed with the China National Intellectual Property Administration on December 29, 2023, and entitled "A Communication Method, Apparatus, and System." The entire content of the priority application is incorporated herein by reference.

### TECHNICAL FIELD

This application relates to the field of communications, and more specifically, to a communication method, apparatus, and system.

### BACKGROUND

Operators can deploy access networks and core networks. After a terminal device accesses the core network through the access network, the terminal device can transmit data with different objects through network elements in the access network and the core network. For example, the terminal device can transmit data with a data network through these network elements, thereby obtaining services provided by the data network. The terminal device can also transmit data with other terminal devices through these network elements, achieving communication between different terminal devices.

The data transmission of terminal devices relies on network elements in the network to ensure quality. The extent to which network elements process information related to data transmission will affect the quality of data transmission.

### SUMMARY

This embodiment of this application provides a communication method, apparatus, and system, which are beneficial to data transmission of a terminal device.

According to the first aspect, a communication method is provided. The method may be performed by a first network element, or may be performed by a chip or a circuit of the first network element. This application does not impose any limitation thereto. For ease of description, the following uses an example in which the method is performed by the first network element for description.

The method includes: the first network element sends a query message, where the query message is used to query energy consumption information used by a second network element to transmit data, and the data includes data related to a terminal device; the first network element receives a response to the query message, where the response includes an index, and the index indicates a relationship between energy consumption used by the second network element to transmit the data and the data; and the first network element obtains, based on the index, the energy consumption used by the second network element to transmit the data.

Among them, the first network element may be a network element in a core network. For example, the first network element is a session management function network element or a network data analytics function network element. The second network element may be a network element in an access network.

Optionally, the first network element sends a query message to the second network element. The first network element may directly send the query message to the second network element, or may send the query message to the second network element by using another network element (for example, a mobility management network element).

Optionally, the first network element receives a response to the query message from the second network element, and the first network element may directly receive the response from the second network element, or may receive the response from the second network element by using another network element (for example, a mobility management network element). Alternatively, the first network element receives a response to the query message from the user plane network element.

Based on the method, the first network element obtains, based on the index, energy consumption that is of the second network element and that is caused by data transmission of the terminal device, so that the first network element can further understand a status of data transmission of the terminal device from a perspective of energy consumption, and may further perform corresponding processing, thereby helping better ensure quality of data transmission.

With reference to the first aspect, in some implementations of the first aspect, energy consumption used by the second network element to transmit the data is determined based on a relationship indicated by the index and a data volume of the data.

With reference to the first aspect, in some implementations of the first aspect, the relationship indicated by the index includes the energy consumption of the second network element for transmitting each unit of the data. Optionally, the energy consumption of the second network element for transmitting the data is equal to the product of the data volume of the data and the energy consumption of the second network element for transmitting each unit of the data. The energy consumption of the second network element for transmitting the data can be obtained through computation, which can reduce processing complexity.

With reference to the first aspect, in some implementations of the first aspect, the first network element obtains, based on the index, the energy consumption of the second network element for transmitting the data, including: the first network element sends the index to a third network element; and the first network element receives, from the third network element, the energy consumption of the second network element for transmitting the data. The first network element receiving, from the third network element, the energy consumption of the second network element for transmitting the data can save the computing resources of the first network element.

With reference to the first aspect, in some implementations of the first aspect, the first network element sends the data volume of the data to the third network element. For example, the first network element sends the index and the data volume of the data to the third network element through the same message. The first network element provides multiple pieces of information for the third network element through the same message, which can reduce signaling overheads.

With reference to the first aspect, in some implementations of the first aspect, the first network element obtains, based on the index, the energy consumption of the second network element used to transmit the data, including: The first network element determines the energy consumption of the second network element used to transmit the data based on the relationship indicated by the index and the data volume of the data. The first network element locally calculates the energy consumption of the second network element used to transmit the data, which can reduce signaling overhead and save transmission resources.

With reference to the first aspect, in some implementations of the first aspect, the response further includes the data volume. The first network element may obtain, from the response at one time, multiple pieces of information used to determine energy consumption, thereby reducing processing latency.

Optionally, the first network element receives the response from the second network element, where the response includes the index and the data volume. The data volume may be a data volume of data related to the terminal device that is transmitted by the second network element in a first time period, where the first time period corresponds to the index.

Alternatively, the first network element receives the response from the user plane network element, where the response includes the index and the data volume. The data volume may be a data volume of the data transmitted in a first time period by a session between the terminal device and the user plane network element, or a data volume of data related to the terminal device that is transmitted by the second network element in the first time period, where the first time period corresponds to the index.

With reference to the first aspect, in some implementations of the first aspect, the query message is further used to query the data volume.

With reference to the first aspect, in some implementations of the first aspect, the method further includes: obtaining, by the first network element based on information about the first time period, the data volume, where the data volume is a data volume of the data transmitted by a session between the terminal device and the user plane network element in the first time period, or a data volume of the data transmitted by the second network element in the first time period, and the first time period corresponds to the index. The first network element may actively obtain the data volume, which helps implement on-demand obtaining of the data volume.

Optionally, the first network element obtains the data volume from the user plane network element or the session management function network based on the information about the first time period. The data volume is a data volume of the data transmitted in the first time period by the session between the terminal device and the user plane network element.

Optionally, the first network element obtains the data volume from the second network element based on the information about the first time period, where the data volume is a data volume of the data transmitted by the second network element in the first time period.

For example, the first network element sends information about the first time period to a user plane network element, and the first network element receives the data volume from the user plane network element. For example, the first network element sends, to the user plane network element, a message used to request the data volume, where the message used to request the data volume includes the information about the first time period. The user plane network element in this example may be replaced with a session management function network element or a second network element.

With reference to the first aspect, in some implementations of the first aspect, the response further includes information about the first time period.

With reference to the first aspect, in some implementations of the first aspect, the first network element receives the response from the second network element, where the response includes the index and the information about the first time period. The first network element may obtain, at a time, from the response, multiple pieces of information used to determine energy consumption, thereby reducing processing latency.

With reference to the first aspect, in some implementations of the first aspect, the query message is further used to query information about the first time period.

With reference to the first aspect, in some implementations of the first aspect, the index indication relationship is determined according to the index and a list corresponding to the second network element, and at least one index in the list corresponding to the second network element corresponds to the relationship, so that the index indication relationship can be quickly determined by looking up the table.

Optionally, the first network element queries, based on the index, the list corresponding to the second network element, to determine the relationship. In other words, the first network element queries, based on the index, the list corresponding to the second network element, to determine the relationship indicated by the index.

Optionally, before the first network element queries, based on the index, the list corresponding to the second network element, the method further includes: sending, by the first network element, a request message to a fourth network element, where the request message is used to request the list corresponding to the second network element, and the request message includes an identifier of the second network element; and receiving, by the first network element from the fourth network element, the list corresponding to the second network element.

Optionally, the sending, by the first network element, a request message to a fourth network element includes: sending, by the first network element, the request message to the fourth network element when the locally stored list corresponding to the second network element expires. The first network element may determine the index correspondence by using a latest list without requesting the list corresponding to the second network element for a plurality of times, so that accuracy of energy consumption can be improved, signaling overheads can be reduced, and transmission resources can be saved.

With reference to the first aspect, in some implementations of the first aspect, the query message includes information used to indicate the terminal device, so that a message receiver accurately learns of a terminal device or terminals with which the query message is used to query transmission energy consumption information of related data.

With reference to the first aspect, in some implementations of the first aspect, energy consumption used by the second network element to transmit the data includes energy consumption used by the second network element to send the data and/or energy consumption used by the second network element to receive the data.

With reference to the first aspect, in some implementations of the first aspect, the method further includes: triggering, by the first network element based on energy consumption of the second network element for transmitting the data, a policy control network element to update a policy related to data transmission.

For example, the first network element sends, to the policy control network element, the energy consumption of the second network element used to transmit the data, so that the policy control network element updates, according to the energy consumption of the second network element used to transmit the data, the policy related to the data transmission. For another example, the first network element sends, to the policy control network element, a message used to request policy update when the energy consumption of the second network element used to transmit the data is greater than or equal to a threshold, so that the policy control network element updates a policy related to data transmission. The first network element triggers, based on the energy consumption used by the second network element to transmit the data, update of the data transmission-related policy, so that a possibility that the second network element provides a high-quality data transmission service for the terminal device can be improved.

According to the second aspect, a communication method is provided. This method may be performed by a third network element, or it may also be performed by a chip or circuit of the third network element. This application does not impose any limitations in this regard. For ease of description, the following uses an example in which the method is performed by the third network element for explanation.

The method includes: a third network element receives an index from a first network element, where the index indicates a relationship between energy consumption used by a second network element to transmit data and the data, and the data includes data related to a terminal device. The third network element determines, based on the relationship indicated by the index, the energy consumption used by the second network element to transmit the data. The third network element sends, to the first network element, the energy consumption used by the second network element to transmit the data.

Among them, the first network element may be a network element in a core network. For example, the first network element is a session management function network element. The second network element may be an access network device. The third network element may be a network element in a core network. For example, the third network element is an energy consumption network element. The third network element may also be a third-party application network element, such as an application function network element.

Based on this method, the third network element sends, to the first network element, the energy consumption of the second network element caused by the data transmission of the terminal device by the second network element. This allows the first network element to further understand the situation of the data transmission of the terminal device from the perspective of energy consumption, and can also perform corresponding processing, which helps better ensure the quality of data transmission.

With reference to the second aspect, in some implementations of the second aspect, the determining, by the third network element, the energy consumption used by the second network element to transmit the data based on the relationship indicated by the index includes: The third network element determines the energy consumption used by the second network element to transmit the data based on the relationship indicated by the index and the data volume of the data.

With reference to the second aspect, in some implementations of the second aspect, the relationship indicated by the index includes the energy consumption used by the second network element to transmit each unit of the data. Optionally, the energy consumption used by the second network element to transmit the data is equal to a product of the data volume of the data and the energy consumption used by the second network element to transmit each unit of the data. The third network element can obtain, through calculation, the energy consumption used by the second network element to transmit the data, which can reduce the processing complexity of the third network element.

With reference to the second aspect, in some implementations of the second aspect, the method further includes: the third network element receives the data volume of the data from the first network element. For example, the third network element receives, through the same message, the index and the data volume of the data from the first network element. The third network element obtains, from the same message, multiple pieces of information used to determine the energy consumption of the second network element. This can reduce signaling overhead and improve processing efficiency.

Alternatively, The third network element receives the data volume of the data from the second network element, or the third network element receives the data volume of the data from the user plane network element. The third network element can obtain the data volume through different channels, which improves the flexibility of information acquisition.

With reference to the second aspect, in some implementations of the second aspect, the third network element queries, based on the index, a list corresponding to the second network element to determine the relationship, that is, the third network element determines, by querying the list corresponding to the second network element, the relationship indicated by the index. At least one index in the table corresponding to the second network element corresponds to the relationship. The third network element can quickly determine the relationship indicated by the index by querying the table.

With reference to the second aspect, in some implementations of the second aspect, the third network element receives an identifier of the second network element from the first network element. The third network element obtains, based on the identifier of the second network element, a list corresponding to the second network element. Based on the identifier of the second network element provided by the first network element, the third network element can accurately obtain the list corresponding to the second network element.

With reference to the second aspect, in some implementations of the second aspect, the energy consumption used by the second network element to transmit the data includes energy consumption used by the second network element to send the data and/or energy consumption used by the second network element to receive the data.

According to the third aspect, a communication method is provided. The method may be performed by a second network element, or may be performed by a chip or a circuit of the second network element. This application does not limit this. For ease of description, the following uses an example in which the method is performed by the second network element for description.

The method includes: receiving, by a second network element, a query message, where the query message is used to query energy consumption information of the second network element used for transmitting data, and the data includes data related to a terminal device; and sending, by the second network element, a response to the query message, where the response includes an index, and the index indicates a relationship between the energy consumption of the second network element used for transmitting the data and the data.

Among them, the second network element may be an access network device.

Optionally, the second network element receives a query message from the first network element. The second network element may directly receive the query message from the first network element, or may receive the query message from the first network element through another network element (such as a mobility management network element).

Optionally, the second network element sends a response to the query message to the first network element. The second network element may directly send the response to the query message to the first network element, or may send the response to the query message to the first network element through another network element (such as a mobility management network element or a user plane network element).

Based on this method, the second network element sends an index, which helps the receiver understand the relationship between the energy consumption of the second network element for transmitting the data and the data itself. This allows the receiver to further understand the data transmission situation of the terminal device from the perspective of energy consumption, and also enables the receiver to perform corresponding processing, which is beneficial to the data transmission of the terminal device.

With reference to the third aspect, in some implementations of the third aspect, the energy consumption used by the second network element to transmit the data is determined based on the relationship indicated by the index and the data volume of the data.

With reference to the third aspect, in some implementations of the third aspect, the relationship indicated by the index further includes the energy consumption of the second network element for transmitting each unit of the data. Optionally, the energy consumption of the second network element for transmitting the data is equal to the product of the data volume of the data and the energy consumption of the second network element for transmitting each unit of the data. The energy consumption of the second network element for transmitting the data can be obtained through computation, which can reduce processing complexity.

With reference to the third aspect, in some implementations of the third aspect, the response further includes the data volume. The data volume may be a data volume of data related to the terminal device that is transmitted by the second network element in a first time period, where the first time period corresponds to the index. The second network element provides, through a same message, multiple pieces of information used to determine the energy consumption, which can reduce signaling overheads and improve processing efficiency.

With reference to the third aspect, in some implementations of the third aspect, the query message is further used to query the data volume.

For example, the query message includes first indication information, where the first indication information is used to query the data volume, or the first indication information is used to indicate that the response of the query message includes the data volume. The second network element sends, based on the first indication information, a response including the data volume.

Optionally, the second network element receives the query message from the first network element, and determines, based on the query message, that the first network element also queries the data volume, and sends a response to the query message of the first network element. The response includes the data volume.

With reference to the third aspect, in some implementations of the third aspect, the response further includes information about a first time period, where the first time period corresponds to the index. The second network element provides the index and the data volume of the data through a same message, so that the receiver obtains, at one time, multiple pieces of information required for determining the energy consumption, which helps reduce signaling overheads and improve processing efficiency.

With reference to the third aspect, in some implementations of the third aspect, the query message is further used to query information about the first time period.

For example, the query message includes second indication information, where the second indication information is used to query information about the first time period, or the second indication information is used to indicate that the response of the query message includes the information about the first time period. The second network element sends, according to the second indication information, a response including the information about the first time period.

Optionally, the second network element receives the query message from the first network element, determines, according to the query message, that the first network element further queries the information about the first time period, and sends a response to the query message to the first network element, where the response includes the information about the first time period.

With reference to the third aspect, in some implementations of the third aspect, the query message includes information used to indicate a second time period, and the second time period includes the first time period. The second network element may accurately learn that the query message is used to query the energy consumption information of the data transmission in a specific time period.

With reference to the third aspect, in some implementations of the third aspect, the query message includes information used to indicate the terminal device, and based on the information, the second network element can accurately learn that the query message is used to query transmission energy consumption information of data related to which terminal device or terminals the query message is used to query.

With reference to the third aspect, in some implementations of the third aspect, the sending, by the second network element, a response to the query message includes: sending, by the second network element, the response to the mobility management network element or the user plane network element. Optionally, the query message includes second information, the second information is used to indicate a target network element on which the second network element sends the response, and the target network element includes the mobility management network element or the user plane network element. that the second network element sends the response to the mobility management network element or the user plane network element includes: sending, by the second network element, the response to the mobility management network element or the user plane network element based on the second information. Based on the second information, the second network element may quickly determine a network element to which the response is sent.

With reference to the third aspect, in some implementations of the third aspect, the relationship is used to update a policy related to data transmission. The method further includes: the second network element receives the updated policy and performs data transmission according to the updated policy. After the policy related to data transmission is updated based on the relationship indicated by the index, the second network element performs data transmission according to the updated policy, which helps improve the possibility that the second network element provides high-quality data transmission services for the terminal device.

With reference to the third aspect, in some implementations of the third aspect, the energy consumption of the second network element for transmitting the data includes at least one of the following: the energy consumption of the second network element for sending the data, or the energy consumption of the second network element for receiving the data.

According to the fourth aspect, a communication method is provided. The method may be performed by a second network element, or may also be performed by a chip or circuit of the second network element. This application does not impose any limitation on this. For ease of description, the following uses an example in which the method is performed by the second network element for description.

The method includes: a second network element receiving a query message from a first network element, wherein the query message is used to query the energy consumption information of the second network element for transmitting the data, and the data includes data related to a terminal device; the second network element calculates, based on an index, the energy consumption of the second network element for transmitting the data, wherein the index indicates the relationship between the energy consumption of the second network element for transmitting the data and the data; and the second network element sends the energy consumption of the second network element for transmitting the data to the first network element.

Based on this method, the second network element, triggered by the query message, sends the energy consumption of the second network element for transmitting the data to the first network element. This helps the first network element further understand the data transmission situation of the terminal device from the perspective of energy consumption. It can also perform corresponding processing, which is beneficial for the data transmission of the terminal device.

With reference to the fourth aspect, in some implementations of the fourth aspect, the second network element calculates, based on an index, the energy consumption of the second network element for transmitting the data, including: the second network element calculates, based on the relationship indicated by the index and the data volume of the data, the energy consumption of the second network element for transmitting the data.

With reference to the fourth aspect, in some implementations of the fourth aspect, the relationship indicated by the index includes the energy consumption of the second network element for transmitting the data per unit. Optionally, the energy consumption of the second network element for transmitting the data is equal to the product of the data volume of the data and the energy consumption of the second network element for transmitting the data per unit. The second network element can obtain the energy consumption of the second network element for transmitting the data based on an operation, which helps reduce processing complexity.

With reference to the fourth aspect, in some implementations of the fourth aspect, the second network element queries, according to the index, a list corresponding to the second network element to determine the relationship, wherein at least one index in the list corresponds to the relationship. The second network element can quickly determine the relationship indicated by the index through a table lookup method, which helps reduce processing complexity.

With reference to the fourth aspect, in some implementations of the fourth aspect, the relationship indicated by the index includes a relationship between the energy consumption used by the second network element to transmit the data and the data in a first time period, where the data includes data transmitted by the second network element in the first time period, and the first time period corresponds to the index.

With reference to the fourth aspect, in some implementations of the fourth aspect, the query message includes information used to indicate a second time period, the second time period includes the first time period, and the second network element can accurately learn of a time period in which the query message is used to query energy consumption information of data transmission.

With reference to the fourth aspect, in some implementations of the fourth aspect, the query message includes information used to indicate the terminal device. Based on the information, the second network element can accurately learn which terminal device or terminal devices the query message is used to query transmission energy consumption information of data related to.

With reference to the fourth aspect, in some implementations of the fourth aspect, the energy consumption used by the second network element to transmit the data includes at least one of the following: energy consumption used by the second network element to send the data, or energy consumption used by the second network element to receive the data.

With reference to the fourth aspect, in some implementations of the fourth aspect, energy consumption used by the second network element to transmit the data is used to update a policy related to data transmission, and the method further includes: receiving, by the second network element, an updated policy, and performing data transmission according to the updated policy. After the data transmission-related policy is updated based on the energy consumption used by the second network element to transmit the data, the second network element performs data transmission based on the updated policy, which helps improve a possibility that the second network element provides a high-quality data transmission service for the terminal device.

According to the fifth aspect, a communications apparatus is provided. The communications apparatus includes a module configured to implement the method according to any one of the first aspect to the fourth aspect and the implementations thereof.

According to the sixth aspect, a communications apparatus is provided, including a processor, a memory, and an optional transceiver. The memory is configured to store instructions. When the instructions are executed by the processor, the processor is enabled to implement the method according to any one of the first aspect to the fourth aspect and the implementations thereof. The transceiver is configured to receive and/or send a signal.

According to the seventh aspect, a computer-readable storage medium is provided. The computer-readable storage medium stores instructions. When the instructions are run on a computer, the computer is enabled to perform the method according to any one of the first aspect to the fourth aspect and the implementations thereof.

According to the eighth aspect, a computer program product comprising instructions is provided. When the instructions are run on a computer, the computer is enabled to perform the method according to any one of the first aspect to the fourth aspect and the implementations thereof.

Aspect 9, provides a chip, where the chip includes a processor and a communications interface. The processor reads, through the communications interface, instructions stored in a memory, for performing the method described in Aspect 1 to Aspect 4 and any implementation thereof. Optionally, as an implementation, the chip may further include a memory, where the memory stores instructions, and the processor is configured to execute the instructions stored in the memory. When the instructions are executed, the processor is configured to perform the method described in Aspect 1 to Aspect 4 and any implementation thereof.

Aspect 10 provides a communication system, where the system includes a first network element and a second network element. The first network element is configured to perform the method described in Aspect 1 and any implementation thereof. The second network element is configured to perform the method described in Aspect 3 and any implementation thereof.

With reference to Aspect 10, in some implementations of Aspect 10, the system further includes a third network element, and the third network element is configured to perform the method described in Aspect 2 and any implementation thereof.

The beneficial effects of the fifth aspect to the tenth aspect and any implementation manner thereof, as described above, may be correspondingly referred to the related descriptions in the first aspect to the fourth aspect and their implementation manners. These descriptions will not be repeated here.

### BRIEF DESCRIPTION OF DRAWINGS

FIG. 1 is a schematic diagram of a network architecture 100 applicable to an embodiment of this application.
FIG. 2 is a schematic flowchart of a communication method 200 according to an embodiment of this application.
FIG. 3 is a schematic diagram of a method for determining an index by an access network device according to an embodiment of this application.
FIG. 4 is a schematic flowchart of a communication method 400 according to an embodiment of this application.
FIG. 5 is a schematic flowchart of a communication method 500 according to an embodiment of this application.
FIG. 6 is a schematic flowchart of a communication method 600 according to an embodiment of this application.
FIG. 7 is a schematic flowchart of a communication method 700 according to an embodiment of this application.
FIG. 8 is a schematic block diagram of a communication apparatus 1000 according to an embodiment of this application.
FIG. 9 is a schematic block diagram of another communication apparatus 2000 according to an embodiment of this application.
FIG. 10 is a schematic diagram of a chip system 3000 according to an embodiment of this application.

### DESCRIPTION OF EMBODIMENTS

Various communication systems all involve data transmission. For example, a common carrier network, also referred to as a public land mobile network (public land mobile network, PLMN), is a network established and operated by a government or an operator approved by the government, such as a mobile network operator (mobile network operator, MNO), for the purpose of providing public land mobile communication services. This involves data transmission. In this embodiment of this application, when an example is provided, it may be based on a PLMN or a network that meets a standard requirement of a 3rd generation partnership project (3rd generation partnership project, 3GPP). The 3GPP network is a short name. The 3GPP network includes but is not limited to a 5th generation (5th-generation, 5G) mobile communication network, a 4th generation (4th-generation, 4G) mobile communication network (also referred to as a long term evolution (long term evolution, LTE) network), and other future communication systems, such as a 6th generation (6th-generation, 6G) mobile communication network, etc.

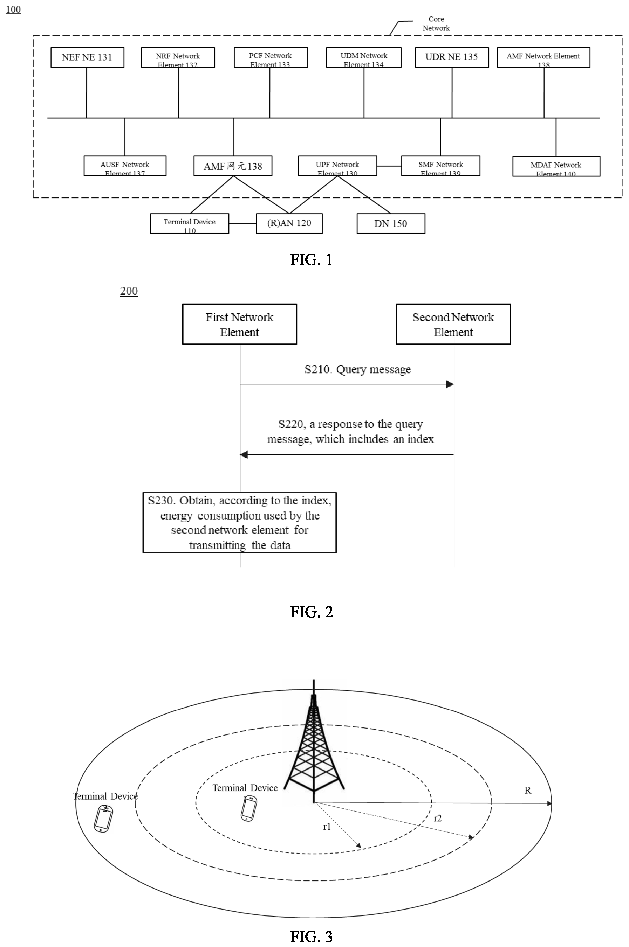

FIG. 1 uses a service-based architecture (service-based architecture, SBA)-based 5G network in a 3GPP non-roaming scenario as an example to provide a schematic diagram of a network architecture 100 to which an embodiment of this application is applicable. As shown in FIG. 1, a network architecture 100 may include a terminal device 110, a data network (data network, DN) 150, and a carrier network part. The carrier network may include but is not limited to a (radio) access network ((radio) access network, (R)AN) 120 and a core network (core network, CN). The following briefly describes the devices or network elements of each part.

The (R)AN 120 may include one or more access network network elements or access network devices. The following uses the access network device as an example for description. The interface between the access network device and the terminal device may be a Uu interface (or referred to as an air interface). Certainly, in future communication, an interface name may remain unchanged, or may be replaced by another name. This is not limited in this application. The access network device is a device that provides a wireless communication function for a terminal device, and may connect the terminal device to a node or device in a network, that is, a network device. An (R)AN can be regarded as a subnet of a carrier network, and is an implementation system between a service node and a terminal device on the carrier network. For example, the terminal device may be connected to a service node in the operator network by using the (R)AN, so as to obtain a service provided by the service node. An access network device in the (R)AN includes but is not limited to a next generation node base station node (next generation node base station, gNB) in a 5G system, and an evolved node B (evolved nodeB) in a long term evolution (long term evolution, LTE). eNB), a radio network controller (RNC), a node B (node B, NB), a base station controller (base station controller, BSC), a base transceiver station (base transceiver station, BTS), and a home base station (for example, a home evolved nodeB, or a home nodeB, HNB), a base band unit (base band unit, BBU), a transmission and receiving point (transmitting and receiving point, TRP), a transmission point (transmitting point, TP), a small cell device, a mobile switching center, a network device in a future network, or the like. Alternatively, the access network device may be a module or a unit that implements a function of a base station, and includes, for example, a centralized unit (central unit, CU) and a distributed unit (distributed unit, DU). In a possible network structure, the CU may be configured to support radio resource control (radio resource control, RRC), a packet data convergence protocol (packet data convergence protocol, PDCP), and a service data adaptation protocol (service data adaptation protocol). Communication under protocols such as SDAP) The DU may be configured to support communication under a radio link control (radio link control, RLC) layer protocol, a medium access control (medium access control, MAC) layer protocol, and a physical layer protocol. A specific technology used by the access network device and a specific device form are not limited in this embodiment of this application. In systems using different radio access technologies, names of devices having an access network device function may be different. For ease of description, in all the embodiments of this application, apparatuses that provide a wireless communication function for a terminal device are collectively referred to as an access network device, and in the embodiments of this application, the access network device may be replaced with an access network network element. It should be understood that a specific type of the access network device is not limited in this embodiment of this application.

Among them, the core network may include but is not limited to the following network elements: a user plane function (user plane function, UPF) network element 130, a network exposure function (network exposure function, NEF) network element 131, a network function repository function (network function repository function, NRF) network element 132, a policy control function (policy control function, PCF) network element 133, a unified data management function (unified data management, UDM) network element 134, a unified data repository (unified data repository, UDR) network element 135, a network data analytics function (network data analytics function, NWDAF) network element 136, an authentication server function (authentication server function, AUSF) network element 137, an access and mobility management function (access and mobility management function, AMF) network element 138, a session management function (session management function, SMF) network element 139, a management data analytics function (management data analytics function, MDAF) network element 140. Among them, the network element may also be referred to as a network function (network function, NF). This is not limited in the embodiments of this application. The following further briefly describes some network elements in the core network.

1. The UPF network element 130 serves as the gateway for communication between the operator's network and the DN. The UPF network element can be used to implement user plane-related functions such as data packet routing and transmission, data packet detection, service usage reporting, quality of service (QoS) processing, lawful interception, uplink data packet detection, downlink data packet storage, and more.

2. The AMF network element 138 is responsible for access control and mobility management for terminal devices accessing the operator's network. This includes functions such as managing the mobile state, assigning temporary identifiers to users, authenticating and authorizing terminal devices, and more.

3. The SMF network element 139 is used to manage sessions of terminal devices. This includes functions such as establishing, modifying, and releasing protocol data unit (PDU) sessions. It is also used for selecting and reselecting UPF network elements, allocating internet protocol (IP) addresses to terminal devices, performing quality of service (QoS) control, and more. Here, the session of the terminal device refers to a channel used for transmitting user plane data. The terminal device and the DN transmit data to each other through the session.

4. The MDAF network element 140 is configured to provide a management data analysis service for one or more network elements, network slice instances, or subnet instances, and may help, by using data analysis, a management system set a proper network topology parameter to perform network configuration, enhance intelligent operation of management plane data related to operation and maintenance, and ensure service quality.

The data network DN 150 may also be referred to as a packet data network (packet data network, PDN), and is usually a network located outside a carrier network, for example, a third-party network. A DN can transmit data to a terminal device through a carrier network to provide services for the terminal device.

Optionally, the network architecture 100 further includes an application function (application function, AF) network element, configured to provide an application layer service. The AF network element may belong to an operator's network, or may be a third-party network element located outside the operator's network.

Optionally, the network architecture 100 further includes an operation, administration and maintenance (operations, administration and maintenance, OAM) network element, configured to manage network, for example, perform performance monitoring, generate maintenance information, and evaluate network stability according to the maintenance information. Detects network faults through periodic query and generates various maintenance and alarm information. Ensure the normal running of the network by scheduling or switching entities. Perform fault monitoring, fault reporting, fault locating, and fault rectification. The operator network may include one or more OAM network elements. For example, the (R)AN 120 includes one or more OAM network elements, denoted as RAN OAM. The core network includes one or more OAM network elements, denoted as core OAM, and messages may be transmitted between different OAM network elements. The OAM network element may be any one of the following management units: an element management system (element management system, EMS), a network management system (network management system, NMS), a management authorization and execution (manage authorization and execution, MAE), and an operation support system (operations support system, an OSS, or a business support system (business support system, BSS), and the OAM network element may also be a set of any plurality of management units in the foregoing management units. This is not limited in this application.

It should be understood that the network element may be a physical entity in a hardware device, a software instance running on dedicated hardware, or a virtualized function instantiated on a shared platform (for example, a cloud platform). In terms of form, the foregoing network elements may be independent devices, or may be integrated into a same device to implement different functions.

The terminal device 110 is a device that has a wireless transceiver function and provides voice and/or data connectivity for a user, and may communicate with one or more network elements in a core network by using an (R)AN. The terminal device may also be referred to as user equipment (user equipment, UE), an access terminal, a terminal, a subscriber unit, a subscriber station, a mobile station, a mobile station, a remote station, a remote terminal, a mobile device, a user terminal, a user agent, a user apparatus, or the like. The terminal device may be deployed on land, including indoors or outdoors, handheld, or vehicle-mounted. It can also be deployed on the water surface (e.g., a ship). It can also be deployed in the air (e.g. on aircraft, balloons, satellites, etc.). The terminal device may be a cellular phone, a cordless phone, a session initiation protocol (session initiation protocol, SIP) phone, a smart phone, a mobile phone, a wireless local loop (wireless local loop, WLL) station, a personal digital assistant (personal digital assistant, PDA), or the like. Alternatively, the terminal device may be a handheld device with a wireless communication function, a computing device, or another device connected to a wireless modem, an in-vehicle device, a wearable device, an unmanned aerial vehicle device, a terminal in the Internet of Things, an Internet of Vehicles, or relay user equipment. The relay user equipment may be a 5G home gateway (residential gateway, RG). Alternatively, the terminal device may be a virtual reality (virtual reality, VR) terminal or an augmented reality (augmented reality). (AR) terminals, wireless terminals in industrial control, wireless terminals in driverless, wireless terminals in telemedicine, wireless terminals in smart grids, wireless terminals in transportation security, wireless terminals in smart cities, and wireless terminals in smart homes. A type, a type, or the like of the terminal device is not limited in this embodiment of this application.

It should be understood that the network architecture applicable to the embodiments of this application is not limited to the network architecture 100, and any network architecture that can implement functions of the foregoing network elements or devices is applicable to the embodiments of this application. In addition, the foregoing names are defined only for facilitating differentiation between different functions, and should not constitute any limitation on this embodiment of this application. This application does not exclude a possibility that another name is used in the 5G network and a future network. For example, in a 6G network, some or all of the foregoing network elements or devices may use a term in 5G, or may use another name or the like.

Using the network architecture 100 shown in FIG. 1 as an example, after accessing a core network by using the (R)AN, the terminal device may transmit data with different objects by using the (R)AN and a network element in the core network. For example, the terminal device may transmit data by using these network elements and the DN, so as to obtain a service provided by the DN. For another example, the terminal device may transmit data to another terminal device by using these network elements, so as to implement communication between different terminal devices. Data transmission of the foregoing terminal device depends on a network element in a network to ensure quality, and a degree of processing related information by the network element for data transmission affects data transmission quality. For the foregoing problem, embodiments of this application provide a communication method, apparatus, and system, so as to facilitate data transmission of a terminal device.

FIG. 2 is a schematic flowchart of a communication method 200 according to an embodiment of this application. As shown in FIG. 2, the communication method 200 may be performed by a first network element and a second network element, or may be performed by a module and/or a component (for example, a chip or an integrated circuit) that are installed in the first network element and the second network element and have corresponding functions. This is not limited in this application. For ease of description, the following uses the first network element and the second network element as execution bodies for description. For a part not described in detail, refer to an existing protocol. The communication method 200 may be applied to the network architecture 100 shown in FIG. 1. For example, the first network element is an SMF network element 139 or an NWDAF network element 136, and the second network element is an access network device in the (R)AN 120. As shown in FIG. 2, the communication method 200 includes the following multiple steps.

**S210. The first network element sends a query message to the second network element, and correspondingly, the second network element receives the query message from the first network element.**

The query message is used to query the energy consumption information used by the second network element to transmit data. The query message may also be referred to as a request message, and is used to request the energy consumption information used by the second network element to transmit data, or is used to request the second network element to report the energy consumption information used by the second network element to transmit data.

Among them, the second network element provides services for the terminal device, including data transmission services. That is, the second network element can forward data between the terminal device and other network elements or devices. For example, the second network element is an access network device in the (R)AN 120. The terminal device accesses the second network element, and accesses the core network through the second network element. Then, the second network element can forward data between the terminal device and the core network element (such as the UPF network element 130).

The data includes data related to the terminal device. For example, the data includes data of the terminal device. Optionally, the data further includes data of another terminal device that has the same specific feature as the terminal device. For example, the data further includes data of another terminal device in the group to which the terminal device belongs. The following uses an example in which the data includes data of the terminal device for description.

The data, namely the data of the terminal device transmitted by the second network element, includes: the data of the terminal device sent by the second network element, and/or, the data of the terminal device received by the second network element. For example, the data includes the data of the terminal device sent by the second network element, or the data includes the data of the terminal device received by the second network element, or the data includes the data of the terminal device sent by the second network element and the data of the terminal device received by the second network element.

The data that is of the terminal device and that is sent by the second network element may include data that is from the terminal device and that is sent by the second network element to another network element or device, and/or data that is sent by the second network element to the terminal device. The data of the terminal device received by the second network element includes: data received by the second network element from the terminal device, and/or data that is received by the second network element from another network element or device and that needs to be sent to the terminal device.

Optionally, the data is user plane data, for example, data transmitted by the second network element between the terminal device and the user plane network element (for example, the UPF network element 130).

The energy consumption information used by the second network element to transmit data may also be referred to as information about energy consumed by the second network element to transmit the data, energy consumption information used by the second network element to transmit data related to the terminal device, energy consumption information used by the second network element to serve the terminal device, network-side energy consumption information corresponding to the terminal device, or network-side energy consumption information caused by the terminal device.

Optionally, the query message includes information used to indicate a terminal device, such as identification information of the terminal device. In this way, the recipient of the query message can accurately learn the terminal device or terminal devices to which the data involved in the queried transmission energy consumption information is related. For example, the information used to indicate the terminal device may be a subscription permanent identifier (SUPI) of the terminal device.

Optionally, the query message includes information about a second time period, which is used to indicate the second time period. In this way, the recipient of the query message can quickly and accurately determine, based on the information about the second time period, that the first network element is querying the energy consumption information of the data transmission used by the second network element in the second time period. In one implementation, the information about the second time period includes a natural time interval, such as from 8:00 to 9:00. In another implementation, the information about the second time period includes the duration of the second time period, such as 1 hour. In yet another implementation, the information about the second time period includes information used to describe the characteristics of the second time period, such as the information about the second time period indicating a nighttime period or a busy period.

Optionally, the query message includes requirement information, which is used to indicate a requirement of the first network element for the energy consumption information. For example, the requirement information indicates a time-period requirement, meaning that the first network element queries energy consumption information used by the second network element to transmit data within a specific time period, and the requirement information may include information about the second time period. For another example, the requirement information indicates a requirement concerning a terminal device, meaning that the first network element queries energy consumption information used by the second network element to transmit data of a specific terminal device, and the requirement information may include information used to indicate the terminal device.

Optionally, the name of the query message may be used to indicate the first network element's requirement for energy consumption information. That is, the recipient of the query message may determine the first network element's requirement for energy consumption information based on the name of the query message. In this case, there is no need to additionally add requirement information in the query message, which can reduce signaling transmission overhead. For example, when the query message is a nighttime energy consumption information query message, it indicates that the query is for the energy consumption information used by the second network element to transmit data during the nighttime period. That is, the second time period is the nighttime period.

In an implementation, the first network element directly sends the query message to the second network element. Correspondingly, the second network element directly receives the query message from the first network element. For example, there is an interface between the first network element and the second network element, and the first network element sends the query message to the second network element by using the interface.

In another implementation, the first network element sends the query message to the second network element by using another network element. An example in which the first network element sends the query message to the second network element by using the mobility management network element (for example, the AMF network element 138) is used below for description. Correspondingly, the second network element receives the query message from the first network element by using the mobility management network element.

For example, the sending, by the first network element, a query message to a second network element by using the mobility management network element includes: the first network element sends the first query message to the mobility management network element, and correspondingly, the mobility management network element receives the first query message from the first network element. and sends the second query message to the second network element according to the first query message. In other words, the mobility management network element sends the second query message to the second network element under trigger of the first query message. The first query message and the second query message may be the same. For example, the mobility management network element transparently transmits the query message received from the first network element to the second network element. Alternatively, the second query message may be a result obtained after the first query message is processed. For a part that is not described in detail in the first query message and the second query message, refer to the foregoing description of the query message.

For example, the information about the second time period included in the first query message is used to describe a feature of the second time period. The mobility management network element may determine the corresponding second time period according to a preconfigured rule, add the second time period represented by a natural time interval to the second query message, and send the second query message to the second network element. Therefore, processing complexity of the second network element is reduced.

For example, the first query message includes information used to indicate the terminal device, the second query message includes information used to indicate a connection, and the connection is a connection, between the mobility management network element and the second network element, used to transmit a terminal device-related message. The following provides description by using an example in which the information used to indicate the connection is the identification information of the connection. To be specific, the mobility management network element may determine the identification information of the connection based on the identification information of the terminal device, and send the second query message including the identification information of the connection to the second network element, so that the second network element may determine the identity of the terminal device based on the identification information of the connection. In other words, it is determined that the first network element queries the energy consumption information of the second network element used to transmit data related to which terminal device the second network element is used to transmit. For example, when the second network element is the access network device, the identification information of the connection may be an identifier (identifier or identity, ID) of the NGAP connection, and the NGAP connection is a connection associated with the terminal device between the mobility management network element network element and the access network device. For example, the second query message is an NGAP message, and a packet header of the NGAP message includes the ID of the NGAP connection.

Optionally, the mobility management network element sends, based on the identification information of the terminal device, the second query message to the second network element serving the terminal device, for example, the identification information of the terminal device in the first query message. For example, the mobility management network element determines, based on the identification information of the terminal device, the second network element serving the terminal device, and sends the second query message to the second network element. For example, the mobility management network element locally stores the correspondence between the identification information of the terminal device and the address of the second network element. The mobility management network element determines the address of the second network element based on the identification information of the terminal device and the correspondence, and sends the second query message to the second network element based on the address. For another example, the mobility management network element sends a first request message, where the first request message includes identification information of the terminal device, and the first request message is used to request an address of a second network element serving the terminal device. Then, the mobility management network element receives a response to the first request message, where the response includes the address of the second network element, and the mobility management network element sends a second query message to the second network element according to the address. The address of the second network element may be an IP address of the second network element.

Optionally, the mobility management network element sends a second query message to the second network element based on the identification information of the second network element. In this implementation, before the mobility management network element sends the second query message to the second network element, the first network element further sends the identification information of the second network element to the mobility management network element. For example, the first query message further includes the identification information of the second network element, so that the mobility management network element can determine, based on the identification information of the second network element, the target network element to which the second query message is to be sent, that is, determine to which network element the second query message is to be sent. For example, the mobility management network element locally stores a correspondence between the identification information of the second network element and the address of the second network element. The mobility management network element determines the address of the second network element based on the identification information of the second network element and the correspondence, and sends the second query message to the second network element based on the address. For another example, the mobility management network element sends a second request message, where the second request message includes the identification information of the second network element, and the second request message is used to request the address of the second network element indicated by the identification information. Then, the mobility management network element receives a response to the second request message, where the response includes the address of the second network element. Then, the mobility management network element sends the second query message to the second network element based on the address. For another example, the identification information of the second network element is the address of the second network element. In this case, the mobility management network element may directly send the second query message to the second network element based on the address.<tl>

S220, the second network element sends a response to the query message of the first network element. Correspondingly, the first network element receives the response from the second network element.

Among them, the response includes an index, which indicates the relationship between the energy consumption of the second network element used to transmit the data and the data itself. For example, the relationship indicated by the index includes the energy consumption of the second network element used to transmit each unit of the data. Here, each unit can be 1 bit (bit), 1 byte (byte), 1 slot (slot), 1 frame (frame), 1 orthogonal frequency division multiplexing (orthogonal frequency division multiplexing, OFDM) symbol, etc. The unit of energy consumption can be joules (J), watt-hours (Wh), kilowatt-hours (kWh), etc. This embodiment of this application does not impose any limitation on this. For example, the index a indicates that the relationship is 10 J/bit. Then, the index a indicates that the energy consumption of the second network element used to transmit each bit of the data is 10 J. That is, the energy consumed by the second network element to transmit 1 bit of data of the terminal device is 10 J. The following refers to this index as an index corresponding to the terminal device.

The energy consumption used by the second network element to transmit the data includes energy consumed by the second network element to send the data and/or energy consumed by the second network element to receive the data. For example, the energy consumption used by the second network element to transmit the data may include the energy consumed by the second network element to send the data, or may include the energy consumed by the second network element to receive the data, or may include both the energy consumed by the second network element to send the data and the energy consumed by the second network element to receive the data.

Among them, the energy consumption of the second network element for sending the data may also be referred to as the energy consumed by the second network element for sending the data of the terminal device, and the energy consumption of the second network element for receiving the data may also be referred to as the energy consumed by the second network element for receiving the data of the terminal device. It should be noted that the data of the terminal device sent by the second network element and the data of the terminal device received by the second network element may have the same content. For example, the second network element may send the data received from the terminal device to another network element or device. However, even if the content of the data is the same, the energy consumed by the second network element for sending the data and the energy consumed by the second network element for receiving the data may be different.

A parameter that affects the relationship between the data and the data, that is, a parameter that affects the index corresponding to the terminal device, that is, a parameter that affects the energy consumption used by the second network element for transmitting the data includes but is not limited to: a distance between the terminal device and the second network element, quality of a channel between the terminal device and the second network element, transmit power of the second network element, a modulation order of data, a quantity of times of data retransmission, a form of a carrier used to transmit data, or a beam used by the second network element to transmit data of the terminal device; or a quantity of data radio bearers (data radio bearer, DRB). A parameter that affects the index corresponding to the terminal device is referred to as an impact parameter below.

The second network element may determine, based on the value of the impact parameter, the index corresponding to the terminal device. For example, when the value of the impact parameter is less than the threshold, the terminal device corresponds to the first index; and when the value of the impact parameter is greater than or equal to the threshold, the terminal device corresponds to the second index.

For example, as shown in FIG. 3, when the impact parameter is the distance between the terminal device and the second network element, the service range of the second network element is a circle whose radius is R and centered on the second network element, and the service range is divided into three areas. The first area is a circle with a second network element as a center and a radius of r1, and the second area is a circle with a small circle radius r1 and a large circle radius r2 centered on the second network element. The third area is a ring whose second network element is the center, a radius of a small circle is r2, and a radius of a large circle is R. The first area, the second area, and the third area are respectively corresponding to an index a, an index b, and an index c, where 0<r1<r2<R. In this example, the second network element may determine the corresponding index based on the area in which the terminal device is located. For example, if the terminal device 1 is located in the first area, the index corresponding to the terminal device 1 is the index a, and the index corresponding to the terminal device 2 is the index c, and the terminal device 2 is located in the third area.

For example, another influencing parameter is the quality of the channel between the terminal device and the second network element. The quality of the channel between the terminal device and the second network element can be measured by the signal-to-noise ratio (signal to noise ratio, SNR) or the signal-to-interference-plus-noise ratio (signal to interference plus noise ratio, SINR)). The following uses the signal-to-noise ratio as an example for description. The second network element may determine different signal-to-noise ratio intervals, which respectively correspond to different indexes. For example, the first interval [SNR1, SNR2) corresponds to the index a, the second interval [SNR2, SNR3) corresponds to the index b, and the third interval [SNR3, SNR4) corresponds to the index c. Herein, SNR1<SNR2< SNR3< SNR4, the bracket "[" indicates that the endpoint is included, and the bracket ")" indicates that the endpoint is not included. In this example, the second network element may determine, based on an interval in which a signal-to-noise ratio of a signal of the terminal device is located, an index corresponding to the terminal device. For example, when a value of the signal-to-noise ratio is located in the first interval, the index corresponding to the terminal device is the index a.<t1>

Alternatively, the second network element may determine the index corresponding to the terminal device in another manner. A specific method may be specified in a protocol or preconfigured. This is not limited in this embodiment of this application.

Optionally, the response further includes a data volume of the data. For example, the data volume is a data volume of data that is of the terminal device and that is transmitted by the second network element in a first time period, and the first time period is corresponding to an index. For example, the query message is further used to query the data volume. For example, the query message includes first indication information, where the first indication information is used to query the data volume, or the first indication information is used to indicate that a response to the query message includes the data volume. The second network element includes the data volume in the response based on the query message, for example, the first indication information in the query message.

Optionally, the response further includes information about a first time period, and the first time period is corresponding to an index. For example, the query message is further used to query information about the first time period. For example, the query message includes second indication information, and the second indication information is used to query the information about the first time period, or the second indication information is used to indicate that a response to the query message includes the information about the first time period. The second network element includes the information about the first time period in the response based on the query message, for example, the second indication information in the query message.

The correspondence between the first time period and the index may be as follows: The index is determined by the second network element based on the value of the impact parameter within the first time period. Herein, the first time period is the same as the second time period, or the second time period includes the first time period.

It should be noted that the response may include multiple indexes. For example, in addition to including the first time period, the second time period also includes one or more other time periods. In this case, in addition to including the index corresponding to the first time period, the response also includes the indexes corresponding to the one or more other time periods. For specific implementation, refer to the communication method 500.

In one implementation, the second network element directly sends the response to the query message to the first network element. Correspondingly, the first network element directly receives the response to the query message from the second network element. For example, if there is an interface between the first network element and the second network element, the first network element and the second network element may directly transmit the response through the interface, thereby simplifying the information transmission process and reducing the transmission delay.

In another implementation, the second network element sends the response to the query message to the first network element through a mobility management network element (for example, the AMF network element 138). Correspondingly, the first network element receives the response from the second network element through the mobility management network element.

In yet another implementation, the second network element sends a response to the query message of the first network element through a user plane network element (such as a UPF network element 130). Correspondingly, the first network element receives the response through the user plane network element. For example, the second network element sends a first response to the user plane network element. Correspondingly, the user plane network element receives the first response from the second network element, and sends a second response to the first network element based on the first response. The first response and the second response may be the same, and the second response may also be a result obtained after processing the first response. For parts that are not fully described in the first response and the second response, reference may be made to the foregoing descriptions of the responses.

For example, the first response includes an index, information about a first time period, and identification information of a terminal device. The second response includes an index and a data volume, where the data volume is determined based on the information about the first time period and the identification information of the terminal device. For example, after receiving the first response, the user plane network element determines, based on the identification information of the terminal device, a session associated with the terminal device, and determines, based on the information about the first time period, a data volume of the data transmitted by the session in the first time period. Then, the user plane network element sends a second response including an index and a data volume to the first network element.

**S230. The first network element obtains, according to the index, energy consumption used by the second network element for transmitting the data.**

Energy consumption used by the second network element to transmit the data may also be referred to as energy consumed by the second network element to transmit the data, network side energy consumption corresponding to the terminal device, or network side energy consumption caused by data transmission of the terminal device.

For example, the first network element may obtain, by using the following manner 2.1 or the manner 2.2, energy consumption of the second network element for transmitting the data.

**Manner 2.1: The first network element determines, according to the relationship indicated by the index and the data volume of the data, energy consumption used by the second network element to transmit the data.**

The relationship indicated by the index is determined based on the index and the list corresponding to the second network element, and at least one index in the list corresponding to the second network element corresponds to the relationship. For example, before the first network element determines the energy consumption of the second network element for transmitting the data, the communication method 200 further includes step S231 (not shown in the figure).

S231. The first network element queries, based on the index, the list corresponding to the second network element to determine the relationship indicated by the index. That is, the first network element determines the relationship indicated by the index by querying the list corresponding to the second network element.

For example, the list corresponding to the second network element includes at least one index, where each index corresponds to a relationship. Different indexes may correspond to the same relationship or different relationships. For example, the relationship indicated by the index includes the energy consumption of the second network element for transmitting each unit of data. In this case, different relationships indicate that the energy consumption of the second network element for transmitting each unit of data is different. For example, the list corresponding to the second network element is shown in Table 1, where index a indicates that the energy consumption of the second network element for transmitting each bit of data is 10J, index b indicates that the energy consumption of the second network element for transmitting each bit of data is 50J, and index c indicates that the energy consumption of the second network element for transmitting each bit of data is 60J. Assuming that the terminal device corresponds to index a, the first network element can determine, by querying Table 1, that the energy consumption of the second network element for transmitting 1 bit of data of the terminal device is 10J.

**Table 1**

| Index | Energy consumption used by the second network element to transmit each unit of data (J/bit) |
|---|---|
| a | 10 |
| b | 50 |
| c | 60 |

Optionally, before the first network element queries, based on the index, the list corresponding to the second network element to determine the relationship, the method further includes: obtaining, by the first network element based on identification information of the second network element, the list corresponding to the second network element. Lists corresponding to different network elements may be different. For example, one or more indexes among the at least one index included in the lists corresponding to different network elements may be different. For another example, in the lists corresponding to different network elements, relationships indicated by the same index may be different. Therefore, before the first network element queries, based on the index, the list corresponding to the second network element, the first network element obtains, based on the identification information of the second network element, the list corresponding to the second network element, so that the relationship indicated by the index can be determined more accurately.

In an example, the obtaining, by the first network element based on the identification information of the second network element, the list corresponding to the second network element includes the following steps S232 and S233 (not shown in the figure).

S232. The first network element sends a fourth request message to the fourth network element, where the fourth request message is used to request a list corresponding to the second network element. Correspondingly, the fourth network element receives the fourth request message from the first network element.

Optionally, the fourth request message includes identification information of the second network element. For example, the response to the query message includes the identification information of the second network element, and the first network element requests, according to the identification information of the second network element, the list corresponding to the second network element from the fourth network element.

The fourth network element may be an OAM network element, for example, RAN OAM, or may be the MDAF network element 140 in FIG. 1.

S233. The fourth network element sends a response of the fourth request message to the first network element, where the response includes the list corresponding to the second network element, and correspondingly, the first network element receives, from the fourth network element, the list corresponding to the second network element.

For example, the fourth network element locally stores lists corresponding to at least one network element, including the list corresponding to the second network element. The list locally stored by the fourth network element may be preconfigured in the fourth network element, or may be determined by the fourth network element through measurement, statistics, or another method. The embodiments of this application do not limit how the fourth network element determines the relationship indicated by each index in the list corresponding to the second network element. It should be understood that the parameters affecting the relationship indicated by each index in the list are the same as the parameters affecting the index corresponding to the terminal device in step S220. For example, the fourth network element may test the energy consumption of the second network element under different values of an influencing parameter to obtain the relationship indicated by the index. Using FIG. 3 as an example, the fourth network element may, for a terminal device in the first area, test the relationship between the energy consumption used by the second network element to transmit data of the terminal device and the data, to obtain the relationship indicated by index a. The relationship indicated by the index may dynamically change, and the fourth network element may perform multiple measurements and update the relationship indicated by the index, that is, update the list corresponding to the second network element.

The fourth network element searches, based on the fourth request message, for example, based on the identification information of the second network element in the fourth request message, for the list corresponding to the second network element, and sends the list corresponding to the second network element to the first network element.

After the first network element receives the second network element's corresponding list from the fourth network element, it can further store the second network element's corresponding list locally for subsequent queries. This can reduce the number of times the first network element requests the list from the fourth network element, thereby lowering signaling overhead and saving transmission resources.

Optionally, the foregoing step S232 and step S233 may be replaced with step S232-a and step S233-a (not shown in the figure).

S232-a: The first network element sends a fifth request message to the fourth network element, where the fifth request message is used to request an index indication relationship. Correspondingly, the fourth network element receives the fifth request message from the first network element.

Among them, the fifth request message may include the identification information of the second network element and the index.

S233-a. The fourth network element sends the relationship indicated by the index to the first network element. Correspondingly, the first network element receives the relationship indicated by the index from the fourth network element.

For example, the fourth network element, based on the identification information of the second network element, searches from the list corresponding to the at least one network element in the local storage for the list corresponding to the second network element. Then, based on the index, the second network element corresponding list is queried, thereby determining that the relationship corresponding to the index in the list is the relationship indicated by the index. Subsequently, the relationship indicated by the index is sent to the first network element.

Based on the aforementioned steps S232-a and S233-a, the first network element obtains the relationship of index indication from the fourth network element, thereby reducing the processing complexity of the first network element.

In another example, the first network element obtains, based on the identification information of the second network element, the list corresponding to the second network element from the list corresponding to the at least one network element in the local storage. This includes the following step S234 (not shown in the figure).

S234: The first network element, based on the identification information of the second network element, searches from the list stored locally to find the list corresponding to the second network element.

For example, if the first network element locally stores a list corresponding to at least one network element, the first network element may search, according to the identification information of the second network element, the locally stored list for the list corresponding to the second network element. If the list corresponding to the second network element is locally stored, the first network element may query the list. The relationship indicated by the index is determined. If the list corresponding to the second network element is not stored locally, the first network element may perform steps S232 and S233 to obtain the list corresponding to the second network element from the fourth network element, and the first network element may also perform steps S232-a and S233-a. obtaining the relationship indicated by the index from the fourth network element.

Optionally, if the first network element locally stores the list corresponding to the second network element, the first network element may query the list when the list is valid, and determine the relationship indicated by the index. When the list expires, step S232 and step S233 are performed to receive the list corresponding to the second network element from the fourth network element, or step S232-a and step S233-a are performed to obtain the relationship indicated by the index from the fourth network element. For example, the first network element locally stores a list corresponding to the second network element and a validity period of the list, and the first network element may determine, according to the validity period of the list, whether the list is valid or expired. Considering that the list corresponding to the second network element may be updated, before querying the local list corresponding to the second network element, the first network element determines whether the list is valid, and requests a list or an index indication relationship from the fourth network element when the list expires. Based on the method, the first network element may determine the index correspondence by using a latest list without requesting the list corresponding to the second network element for a plurality of times, so that accuracy of energy consumption can be improved, signaling overheads can be reduced, and transmission resources can be saved.

In one implementation, the response to the query message includes the data volume of the data, that is, the first network element can obtain the data volume from the response. In another implementation, the first network element obtains the data volume based on the information of the first time period. The data volume is the data volume of the data transmitted within the first time period in a session between the terminal device and the user plane network element. Alternatively, the data volume is the data volume of the data transmitted by the second network element within the first time period.

For example, the first network element obtains, based on the information of the first time period, the data volume of the data from the user plane network element. The data volume is the data volume of the data transmitted within the first time period in a session between the terminal device and the user plane network element, as described in steps S235 and S236 (not shown in the figure).

S235. The first network element sends information about the first time period to the user plane network element. Correspondingly, the user plane network element receives the information about the first time period from the first network element.

For example, the response to the query message includes information about the first time period, and the first network element sends, to the user plane network element, a sixth request message used to request the data volume. The sixth request message includes the information about the first time period and the identification information of the terminal device.

S236. The user plane network element sends a data volume to the first network element. The data volume is the data volume of the data transmitted within the first time period for the session associated with the terminal device and the user plane network element. Correspondingly, the first network element receives the data volume from the user plane network element.

For example, the user plane network element determines, based on the identification information of the terminal device, a session associated with the terminal device, and determines, based on the information about the first time period, the data volume of the data transmitted within the first time period for the session, and then sends the data volume to the first network element.

Optionally, in step S235, the first network element directly sends the information about the first time period to the user plane network element. Similarly, in step S236, the user plane network element directly sends the data volume to the first network element. For example, there is an interface between the first network element and the user plane network element, and the first network element and the user plane network element may directly exchange information through the interface. For example, the first network element is an SMF network element.

Optionally, in step S235, the first network element sends the information about the first time period to the user plane network element by using the fifth network element. Similarly, in step S236, the user plane network element sends the data volume to the first network element by using the fifth network element. For example, the first network element is an NWDAF network element, and the fifth network element is an SMF network element.

For example, the first network element obtains, based on the information about the first time period, a data volume of data from the session management function network element. The data volume is the data volume of data transmitted in the session between the terminal device and the user plane network element in the first time period, as described in steps S235-a and S236-b (not shown in the figure).

S235-a: The first network element sends information about the first time period to the session management function network element. Correspondingly, the session management function network element receives the information about the first time period from the first network element.

For the specific implementation of step S235-a, refer to step S235.

S236-a: The session management function network element sends a data volume to the first network element. The data volume is the data volume of data transmitted in the session between the terminal device and the user plane network element in the first time period. Correspondingly, the first network element receives the data volume from the session management function network element.

For example, the session management function network element determines, based on the identification information of the terminal device, a session associated with the terminal device, and determines, based on the information about the first time period, the data volume of data transmitted in the session between the terminal device and the user plane network element in the first time period, and then sends the data volume to the first network element. For example, the session management function network element has the capability of collecting statistics on the data volume of data transmitted in the session.

For another example, the first network element obtains a data volume from the second network element according to the information about the first time period, where the data volume is a data volume of the data transmitted by the second network element in the first time period. That is, steps S235 and S236 may be replaced with the following steps S235-b and S236-b (not shown in the figure).

S235-b. The first network element sends the information about the first time period to the second network element. Correspondingly, the second network element receives the information about the first time period from the first network element.

For specific implementation of step S235-b, reference may be made to step S235.

S236-b. The second network element sends a data volume to the first network element, where the data volume is a data volume of the data transmitted in a session between the terminal device and the user plane network element in the first time period. Correspondingly, the first network element receives the data volume from the second network element.

For example, the second network element determines, based on the identification information of the terminal device, a data volume of data related to the terminal device that is transmitted in the first time period, and then sends the data volume to the first network element.

After determining the relationship indicated by the index and obtaining the data volume, the first network element may determine, according to the relationship and the data volume, energy consumption used by the second network element to transmit the data. For example, the relationship indicated by the index includes energy consumption of the second network element for transmitting the data per unit, and the energy consumption of the second network element for transmitting the data is equal to a product of the data volume multiplied by the energy consumption of the second network element for transmitting the data per unit.

When the response to the query message includes a plurality of indexes, the first network element may determine, by using the foregoing steps, a relationship indicated by each index, obtain a data volume corresponding to each index, and further determine, based on the relationship indicated by each index and the data volume corresponding to each index, energy consumption used by the second network element to transmit the data. For example, the response to the query message includes a first index and a second index, the first index corresponds to the first time period, first data corresponding to the first index is data of the terminal device transmitted by the second network element in the first time period, and a relationship indicated by the first index is energy consumption of the second network element used to transmit per unit of first data. Energy consumption used by the second network element for transmitting the first data is equal to a product of a data volume of the first data and energy consumption used by the second network element for transmitting the first data per unit. Similarly, the second index corresponds to the third time period, the second data corresponding to the second index is data of the terminal device transmitted by the second network element in the third time period, and the relationship indicated by the second index is energy consumption of the second network element used to transmit per unit of second data. Therefore, the energy consumption used by the second network element to transmit the second data is equal to a product of the data volume of the second data multiplied by the energy consumption used by the second network element to transmit the second data per unit. In this case, energy consumption used by the second network element for transmitting the data of the terminal device is equal to energy consumption used by the second network element for transmitting the first data plus energy consumption used by the second network element for transmitting the second data. The first period and the third period belong to the second period.

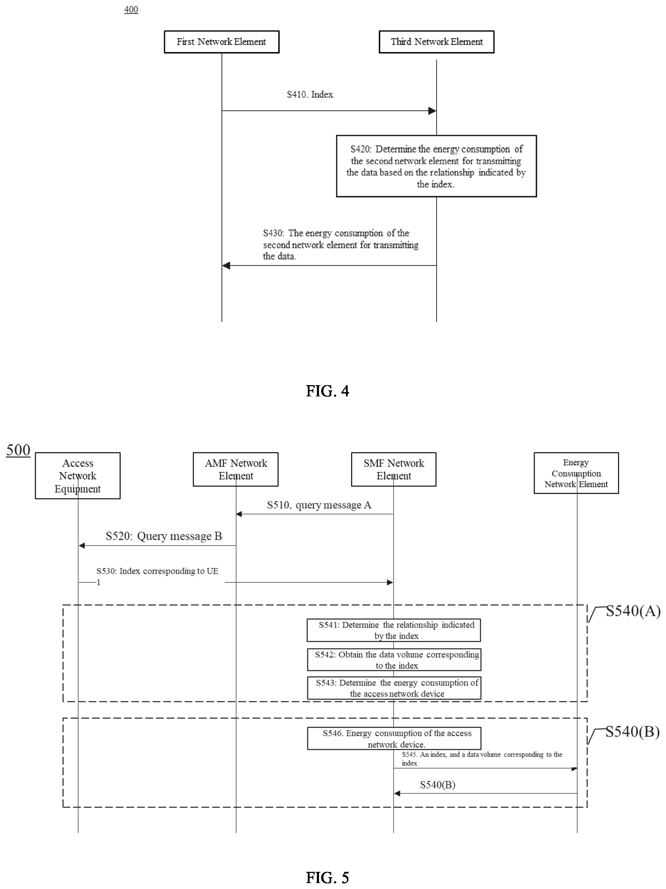

**Manner 2.2: The first network element obtains, according to the index, the energy consumption that is used by the second network element to transmit the data and that is used by the second network element to transmit the data includes steps S410 to S430 shown in** **FIG. 4****.**

**S410. The first network element sends an index to the third network element, and correspondingly, the third network element receives the index from the first network element.**

The third network element may be an energy consumption network element, and is configured to collect statistics on and calculate energy consumption of another network element or device. The energy consumption network element may be a network element in a core network, or may be a third-party AF network element. The energy consumption network element may be separately disposed, or may be integrated with another network element. This is not limited in this embodiment of this application.

For example, the first network element sends a third request message to the third network element, where the third request message includes an index, and the third request message may be used to request energy consumption used by the second network element to transmit the data.

**S420. The third network element determines, according to the relationship indicated by the index, energy consumption used by the second network element to transmit the data.**

For example, the third network element queries, according to the index, the list corresponding to the second network element, to determine the relationship. In other words, the third network element queries the list corresponding to the second network element, to determine the relationship indicated by the index, where at least one index in the list corresponding to the second network element corresponds to the relationship. For an implementation manner in which the third network element queries, according to the index, the list corresponding to the second network element, to determine the relationship, refer to the description about determining, by the first network element, the relationship indicated by the index in the manner 2.1. Details are not described herein again.

The determining, by the third network element, the energy consumption used by the second network element to transmit the data according to the relationship indicated by the index may include: The third network element determines, according to the relationship indicated by the index and the data volume of the data, the energy consumption used by the second network element to transmit the data. In this implementation, before the determining, by the third network element based on the relationship indicated by the index, energy consumption used by the second network element to transmit the data, the method further includes: obtaining, by the third network element, a data volume of the data.

In an example, the third network element receives the data volume from the first network element. Correspondingly, the first network element sends the data volume of the data to the third network element. For example, the first network element may send the index and the data volume to the third network element by using a same message in step S410, so that the third network element may obtain the index and the data volume at a time, thereby reducing a processing delay. Alternatively, the first network element may send the index and the data volume to the third network element by using different messages. This is not limited in this embodiment of this application.

In another example, the third network element obtains the data volume from the second network element. For example, in step S410, the third network element receives the index, the information about the first time period, and the identification information of the terminal device from the first network element, and sends the information about the first time period and the identification information of the terminal device to the second network element. For example, the third network element sends, to the second network element, a seventh request message used to request a data volume. The seventh request message includes the information about the first time period and the identification information of the terminal device. Correspondingly, the second network element receives the information about the first time period and the identification information of the terminal device from the third network element, and sends a data volume to the third network element, where the data volume is a data volume of data of the terminal device transmitted by the second network element in the first time period.

In still another example, the third network element obtains the data volume from the user plane network element. For example, the third network element receives, in step S410, the index of the first network element, the information about the first time period, and the identification information of the terminal device from the first network element, and sends the information about the first time period and the identification information of the terminal device to the user plane network element. For example, the third network element sends, to the user plane network element, a seventh request message used to request a data volume, where the seventh request message includes the information about the first time period and the identification information of the terminal device. Correspondingly, the user plane network element receives the information about the first time period and the identification information of the terminal device from the third network element, and sends a data volume to the third network element. The data volume is a data volume of data transmitted in the first time period by the session between the terminal device and the user plane network element.

After the third network element determines the relationship indicated by the index and obtains the data volume, it can determine, based on the relationship and the data volume, the energy consumption of the second network element for transmitting the data. For example, the relationship indicated by the index includes the energy consumption of the second network element for transmitting each unit of the data. In this case, the energy consumption of the second network element for transmitting the data is equal to the product of the energy consumption of the second network element for transmitting each unit of the data and the data volume of the data. For a specific implementation of how the third network element determines, based on the relationship and the data volume, the energy consumption of the second network element for transmitting the data, refer to the description of how the first network element determines the energy consumption in method 2.1.

**S430,** the third network element sends, to the first network element, the energy consumption of the second network element for transmitting the data. Correspondingly, the first network element receives, from the third network element, the energy consumption of the second network element for transmitting the data.

After the first network element sends an index to the third network element, the first network element can obtain the energy consumption of the second network element for transmitting the data. This can reduce the processing complexity of the first network element.

In this embodiment of this application, the second network element sends the index to the first network element, to indicate a relationship between the data related to the terminal device and the energy consumption used by the second network element for transmitting the data. The first network element obtains, based on the index, the energy consumption used by the second network element for transmitting the data. Therefore, the first network element may further learn about a status of data transmission related to the terminal device from a perspective of energy consumption, and may further perform corresponding processing, thereby facilitating data transmission of the terminal device.

Optionally, the communication method 200 further includes the following steps S240 to S260 (not shown in the figure).

S240. The first network element triggers, according to the energy consumption of the second network element for transmitting the data, a policy control network element to update a policy related to data transmission.

For example, when the energy consumption used by the second network element to transmit the data is greater than or equal to the threshold, the first network element triggers the policy control network element to update the policy related to data transmission. For example, a policy control request trigger condition is configured for the second network element, and the condition includes that energy consumption used by the second network element to transmit the data is greater than or equal to a threshold. When the condition is met, the first network element sends, to the policy control network element, a message used to request policy update. such as the Npcf_SMPolicyControl_Update request message. For another example, the first network element sends a notification message to the policy control network element, where the notification message is used to notify the policy control network element that energy consumption of the second network element used to transmit the data is excessively high. The first network element may further send, to the policy control network element, a message used to request to reduce energy consumption related to data transmission, or send a message used to request to enable the energy saving mode. The message may include a cause value, and the cause value is used to indicate that energy consumption used by the second network element to transmit the data is excessively high.

For example, the first network element sends, to the policy control network element, the energy consumption of the second network element for transmitting the data, so that the policy control network element can update, based on the energy consumption of the second network element for transmitting the data, the policy related to the data transmission. For example, when the energy consumption used by the second network element to transmit the data is greater than or equal to the threshold, the policy control network element updates the policy related to the data transmission.

S250. The policy control network element sends an updated data transmission-related policy to the first network element, and correspondingly, the first network element receives the updated policy from the policy control network element.

For example, the policy control network element updates, triggered by the first network element, a policy related to data transmission, and sends an updated policy to the first network element.

S260. The first network element sends an updated data transmission-related policy to the second network element.

For example, the first network element sends, to the second network element according to the policy received in step S250, the updated policy related to the data transmission of the terminal device, for example, including the updated one or more QoS parameters related to the data transmission of the terminal device. Correspondingly, the second network element receives the updated data transmission-related policy from the first network element, and performs data transmission according to the updated policy.

Based on the foregoing embodiment, the first network element triggers an update of a data transmission-related policy based on the energy consumption of the second network element used to transmit the data, so that the second network element may perform data transmission based on the updated policy, which helps the second network element provide a high-quality data transmission service for the terminal device. Further, in a case in which the second network element uses energy consumption for transmitting the data to be excessively high, the first network element triggers the policy control network element to update the policy, for example, enabling an energy saving mode or reducing energy consumption related to data transmission, which helps implement energy saving in a network.

FIG. 5 is a schematic flowchart of a communication method 500 according to an embodiment of this application. For example, the first network element is the SMF network element 139 in FIG. 1, the second network element is the access network device in the (R)AN 120, the third network element is the energy consuming network element, and the terminal device is UE 1. A specific implementation manner of the communication method 200 is described. The communication method 500 may be performed by the SMF network element, the AMF network element, the access network device, and the energy consumption network element, or may be performed by a module and/or component (for example,) installed in the SMF network element, the AMF network element, the access network device, and the energy consumption network element that has corresponding functions. a chip, an integrated circuit, or the like) is performed. This is not limited in this application. For ease of description, the following uses an SMF network element, an AMF network element, an access network device, and an energy consumption network element as execution bodies for description. For a part not described in detail, refer to descriptions in an existing protocol and the communication method 200. As shown in FIG. 5, the communication method 500 includes the following multiple steps.

**S510. The SMF network element sends a query message A to the AMF network element. Correspondingly, the AMF network element receives the query message A from the SMF network element, where the query message A is used to query the energy consumption information used by the access network device to transmit the data of the UE 1.**

For example, to collect statistics on network side energy consumption corresponding to the UE 1, the SMF network element sends the query message A to the AMF network element serving the UE 1.

For another example, to collect statistics on network side energy consumption corresponding to the session 1, that is, energy consumption of the access network device used to transmit data of the session 1, the SMF network element sends the query message A to the AMF network element serving the UE 1. The session 1 is a session between the UE 1 and the UPF network element 130.

The AMF network element corresponding to the UE 1 is the AMF network element serving the UE 1, that is, the AMF network element serving the UE 1.

For example, in a process of establishing the session 1, when the SMF network element receives the session establishment request of the UE 1 by using the AMF network element, the SMF network element locally stores a correspondence between the identifier of the session 1, the identifier of the UE 1, and the address of the AMF network element. Therefore, the SMF network element may determine the address of the AMF network element based on the correspondence and the identifier of the session 1, send the query message A to the AMF network element based on the address of the AMF network element, and add the identifier of the UE 1 to the query message A.

For example, in the process of establishing session 1, the SMF network element records the correspondence between the identifier of session 1 and the identifier of UE 1. Based on this correspondence and the identifier of session 1, the SMF network element can determine the identifier of UE 1, and then determine the address of the AMF network element serving UE 1 based on the identifier of UE 1. According to the address of the AMF network element, the SMF network element sends a query message A to the AMF network element.

For example, the SMF network element may obtain the AMF network element corresponding to UE 1 through the AMF network element discovery procedure. For example, the SMF network element sends the location information of UE 1 to the NRF network element, and then the SMF network element receives the address of the AMF network element corresponding to UE 1 from the NRF network element. The SMF network element may determine the location information of UE 1 based on historical information of the session (i.e., session 1) of UE 1.

The SMF network element may further determine, in another manner, the UE to which the session belongs and the AMF network element corresponding to the UE. This is not limited in this embodiment of this application.

This embodiment of this application does not impose any limitations on the triggering condition for the SMF network element to send a query message A to the AMF network element. For example, the SMF network element may send the query message A to the AMF network element based on a request from another network element or based on a rule preconfigured by an operator. When the SMF network element receives a request from another network element to collect statistics on the network-side energy consumption value corresponding to session 1, the SMF may send the query message A to the AMF network element when there is a connection between UE 1 and the network side, that is, when UE 1 is in a connected state. In the case where UE 1 is disconnected from the network side, the SMF may reject the request from the network element.

The query message A may include identification information of the UE 1, so that the AMF network element may determine the UE 1 based on the identification information of the UE 1. The query message A may further include identification information of an access network device, so that the AMF network element may determine, in step S520, based on the identification information of the access network device, to which access network device the query message B is to be sent.

Optionally, the query message A further includes first information used to indicate a time period. The AMF network element may determine, based on the first information, that the query message A is used to query energy consumption information for transmitting data of the UE 1 in which time period. The following refers to this time period as a statistical time period, and the statistical time period may correspond to the second time period in the communication method 200. The first information may be used to indicate a natural time interval, or may be used to indicate a duration of the statistical time period, or may be used to describe a feature of the statistical time period. For specific implementation, refer to the description of the information about the second time period in step S210. Details are not described herein again.

S520. The AMF network element sends a query message B to an access network device. Correspondingly, the access network device receives the query message B from the AMF network element.

For example, the AMF network element sends, based on the query message A, a query message B to an access network device. It can also be said that, under the trigger of the query message A, the AMF network element sends a query message B to an access network device.

In an example, the AMF network element sends query message B to the access network device serving UE 1 based on the identification information of UE 1 in query message A. In another example, the AMF network element sends query message B to the access network device indicated by the identification information of the access network device in query message A. For specific implementation, refer to the relevant description of step S210.

The query message B may include the identification information of the UE 1. For example, the AMF network element adds the identification information of the UE 1 in the query message A to the query message B and sends the query message B to the access network device. Alternatively, the query message B includes identification information of an NGAP connection, and the NGAP connection is a connection between the AMF network element and the access network device and used to transmit a message related to the UE 1. For example, the query message B is an NGAP message, and a packet header of the NGAP message includes the identifier of the NGAP connection.

The query message B may further include second information used to indicate a time period, so that the access network device may learn, based on the second information, that a time period in which the access network device is used to transmit the data of the UE 1 is queried. The second information may be the same as the first information, or may be obtained based on the first information. For example, the first information is used to indicate the night time period. If the AMF network element determines that the natural time interval corresponding to the night time period is from 22:00 to 06:00, the AMF network element generates the second information used to indicate the natural time interval from 22:00 to 06:00. The second information may be further used to indicate a statistical period determined by the AMF network element based on a preconfigured rule. For example, the preconfigured rule indicates that the statistical period is one hour starting from the next hour after the query message is received. Assuming that the AMF network element receives the query message A at 07:40, the second information is used to indicate the natural time interval from 8:00 to 9:00. The AMF network element explicitly notifies the access network device of the natural time interval by using the second information, so that processing complexity of the access network device can be reduced.

**S530,** the access network device sends a response message to the SMF network element. Correspondingly, the SMF network element receives the response message from the access network device. The response message includes one or more indexes corresponding to UE 1.

Optionally, the access network device sends a response message to the SMF network element through the AMF network element. Correspondingly, the SMF network element receives the response message from the access network device through the AMF network element.

For example, after receiving the query message B, the access network device first determines a statistical time period. The following describes, based on whether the query message B includes the second information, the method for determining the statistical time period in different cases.

**Case 1:** The query message B does not include the second information. The access network device determines the statistical time period based on the preconfigured rule.

In an example, the preconfigured rule indicates that the statistical time period is one hour after the access network device receives the query message B. Assuming that the moment when the access network device receives the query message B is 7:40, the statistical time period is from 7:40 to 8:40.

In another example, the statistical policy indicates that the statistical time period starts at the first full hour after the access network device receives the query message B, and lasts for one hour. Assuming that the moment when the access network device receives the query message B is 7:40, the statistical time period is from 8:00 to 9:00.

**Case 2: If the query message B includes the second information, the access network device may determine the statistical time period based on the second information.**

For example, if the second information is used to indicate a natural time interval, the statistical time period is the natural time interval indicated by the second information.

For another example, if the second information is used to indicate the duration of the statistical time period, the access network device may determine the start moment of the statistical time period based on a preconfigured rule. For example, the start moment is the moment when the access network device receives the query message B, or the start moment is the first full hour after the access network device receives the query message B. In this case, the statistical time period starts from the start moment and lasts for the duration indicated by the second information.

For another example, if the second information is used to describe a feature of the statistical time period, the access network device may determine the corresponding statistical time period based on a preconfigured rule. For example, the first information is used to indicate a nighttime period, and the preconfigured rule indicates that the nighttime period is from 22:00 to 6:00. In this case, the statistical time period is from 22:00 to 6:00.

Next, the access network device may send, to the SMF network element in any one of the following manners, one or more indexes corresponding to UE 1 in a statistical time period.

**Example 5.1,** the access network device sends, to the SMF network element at intervals of the first period in the statistical time period, the index corresponding to UE 1 in the statistical time period.

Within the first period, the access network device may determine the index corresponding to UE 1 at intervals of the second period. The second period is less than or equal to the first period, and the first period may also be referred to as a reporting period. The query message B includes the first period and/or the second period, or the access network device determines the first period and/or the second period according to a preconfigured rule. The following uses Example 1 for description.

Example 1, the statistical time period is from 8:00 to 9:00, the first period is 30 minutes, and the second period is 15 minutes. Then, the access network device determines, at 8:15, the index a corresponding to UE 1, and determines, at 8:30, the index b corresponding to UE 1. Then, the access network device sends the index a and the index b corresponding to UE 1 to the SMF network element. For example, the access network device sends a response message A, including the index a and the index b. Then, the access network device determines, at 8:45, the index a corresponding to UE 1, and determines, at 9:00, the index a corresponding to UE 1, and sends the index a corresponding to UE 1 to the SMF network element. For example, the access network device sends a response message B, including the index a.

Among them, the access network device determines at 8:15 that the index a corresponding to UE 1 can be as follows: The access network device determines the index a corresponding to UE 1 based on the value of the impact parameter at the moment of 8:15. Alternatively, the access network device determines the index a corresponding to UE 1 based on the value of the impact parameter within the time period from 8:00 to 8:15.

In one implementation **(Method 5.1.1),** the response message includes one or more indexes corresponding to UE 1, as well as information about the time periods corresponding to each index. That is, while the access network device sends one or more indexes corresponding to UE 1 to the SMF network element, it also sends the time periods corresponding to each index to the SMF network element. For example, in Example 1, the response message A may include Table 2, and the response message B may include Table 3.

**Table 2**

| Index | Time Period |
|---|---|
| a | 8:00 AM to 8:15 AM |
| b | 8:15 AM to 8:30 AM |

**Table 3**

| Index | Time Period |
|---|---|
| a | 8:30 AM to 8:45 AM |
| a | 8:45 AM to 9:00 AM |

Optionally, when the multiple indexes determined by the access network device within the first period are the same, the access network device may aggregate the time periods corresponding to the same index and then send them to the SMF network element. For example, Table 3 can be replaced with Table 3-1.

**Table 3-1**

| Index | Time Period |
|---|---|
| a | 8:30 AM to 9:00 AM |

Optionally, that the response message includes the information about the time period corresponding to each index may be replaced with, where the response message includes the second period and a start moment or an end moment of the time period corresponding to each index. Optionally, when the SMF network element knows the second period, for example, the query message B includes the second period, or the preconfigured rule in the SMF network element and the preconfigured rule in the access network device include a same second period, the time period corresponding to each index included in the response message may be replaced with: The response message includes a start moment or an end moment of a time period corresponding to each index. For example, Table 2 and Table 3 may be respectively replaced with Tables 2-1 and 3-2.

**Table 2-1**

| Index | Start Time |
|---|---|
| a | 8:00 AM |
| b | 8:15 AM |

**Table 3-2**

| Index | Start Time |
|---|---|
| a | 8:30 AM |
| a | 8:45 AM |

In another implementation (Manner 5.1.2), the response message includes one or more indexes corresponding to the UE 1 and a data volume corresponding to each index. In other words, when sending the one or more indexes corresponding to the UE 1 to the SMF network element, the access network device further sends, to the SMF network element, a data volume corresponding to each index. The data volume corresponding to each index is a data volume of data of the UE 1 transmitted by the access network device in the time period corresponding to the index.

In Example 1, the access network device further determines that the access network device transmits X bits of data of the UE 1 from 8:00 o'clock to 08:15, and transmits Y bits of data of the UE 1 from 08:15 to 8:30. Z bits of data of UE 1 are transmitted from 8:30 to 8:45, and L bits of data of UE 1 are transmitted from 8:45 to 9:00. In this case, the access network device further sends, to the SMF network element, a data volume X bits corresponding to the index a, a data volume Y bits corresponding to the index b, and Z bits and L bits corresponding to the index a. For example, the response message A may include Table 4, and the response message B may include Table 5. Optionally, when the SMF network element knows the unit of the data amount, for example, the unit of the data amount is specified in a protocol, or the rule preconfigured by the SMF network element includes the unit of the data amount, the unit of the data amount in Table 4 and Table 5 may be omitted.

**Table 4**

| Index | Data Volume (Unit: bit) |
|---|---|
| a | X |
| b | Y |

**Table 5**

| Index | Data Volume (Unit: bit) |
|---|---|
| a | Z |
| a | L |

Optionally, when the multiple indexes determined by the access network device within the first period are the same, the access network device may sum up the data volumes corresponding to the same indexes and then send the summed data volumes to the SMF network element. For example, Table 5 may be replaced with Table 5-1.

**Table 5-1**

| Index | Data Volume (Unit: bit) |
|---|---|
| a | Z+L |

**Method 5.2:** After the statistical period ends, the access network device sends the index corresponding to UE 1 to the SMF network element.

During the statistical period, the access network device may determine the index corresponding to UE 1 at the start time of the statistical period and at every second cycle. The second cycle is less than or equal to the length of the statistical period. Query message B includes the second cycle, or the access network device determines the second cycle according to a preconfigured rule. It should be understood that method 5.2 may be considered as a scenario in method 5.1 where the second cycle is equal to the length of the statistical period. Therefore, for specific implementation of method 5.2, reference may be made to method 5.1, and details are not described herein again.

**Method 5.3:** The access network device may determine the index corresponding to UE 1 at the start time of the statistical period and at every second cycle. When the index changes, the access network device sends the index corresponding to UE 1 before the change to the SMF network element. The access network device also sends the most recently determined index corresponding to UE 1 to the SMF network element at the end time of the statistical period. The following uses Example 2 for illustration.

Example 2: The statistical period is from 8:00 to 9:00. The second period is 15 minutes. The access network device determines at 8:00 that the index a corresponding to UE 1 is used. At 8:15, it determines that the index corresponding to UE 1 changes to index b, and sends index a to the SMF network element. For example, the access network device sends a response message C to the SMF network element, including index a. Then, at 8:30, the access network device determines that the index corresponding to UE 1 is still index b, and does not need to send the index to the SMF network element. Then, at 8:45, the access network device determines that the index corresponding to UE 1 changes to index a, and sends index b to the SMF network element. For example, the access network device sends a response message D to the SMF network element, including index b. Finally, at 9:00, the end time of the statistical period, the access network device sends the most recently determined index a to the SMF network element. For example, the access network device sends a response message E to the SMF network element, including index a.

In an implementation **(Method 5.3.1),** the response message includes one or more indexes corresponding to UE 1, and a time period corresponding to each index. That is, when the access network device sends the one or more indexes corresponding to UE 1 to the SMF network element, the access network device also sends the time period corresponding to each index to the SMF network element. For example, in Example 2, the response message C further includes the time period from 8:00 to 8:15, and the response message D further includes the time period from 8:15 to 8:45, and the response message E further includes the time period from 8:45 to 9:00.

In another implementation (Manner 5.3.2), the response message includes one or more indexes corresponding to UE 1, as well as the data volume corresponding to each index. That is, while the access network device sends one or more indexes corresponding to the terminal device to the SMF network element, it also sends the data volume corresponding to each index to the SMF network element.

As in Example 2, before sending the response message C, the access network device also determines that from 8:00 to 8:15, the data X bits of UE 1 was transmitted. The response message C also includes the data volume X bits corresponding to the index a. Before sending the response message D, the access network device determines that from 8:15 to 8:45, the data Y bits of UE 1 was transmitted. The response message D also includes the data volume Y bits corresponding to the index b. Before sending the response message E, the access network device determines that from 8:45 to 9:00, the data Z bits of UE 1 was transmitted. The response message E also includes the data volume Z bits corresponding to the index a.

In yet another implementation, the response message includes one or more indexes corresponding to UE 1, the data volume corresponding to each index, and the corresponding time period. For example, the foregoing manner 5.1.1 and manner 5.1.2 may be combined, and manner 5.3.1 and manner 5.3.2 may be combined.

Optionally, when the query message B does not include the second information, the access network device may send, to the SMF network element at intervals of a first period, the index corresponding to UE 1. For specific implementation, refer to the foregoing manner 5.1. For the access network device, it may also determine the index corresponding to UE 1 at a moment when the second request message is received, and at intervals of a second period. When the index changes, the access network device sends, to the SMF network element, the index corresponding to UE 1 before the change. For specific implementation, refer to the foregoing manner 5.3.

Optionally, the query message B further includes indication information A. For example, the query message A includes the indication information A, and the AMF network element carries the indication information A in the query message A and sends the query message A to the access network device.

The indication information A is used to indicate the type of information included in the response message. It can also be used to indicate the reporting policy of the access network device. That is, it indicates that the response message includes an index corresponding to the terminal device, or includes an index corresponding to the terminal device and a data volume corresponding to each index, or includes an index corresponding to the terminal device and a time period corresponding to each index, or includes an index corresponding to the terminal device, a data volume corresponding to each index, and a corresponding time period.

Accordingly, the access network device sends a response message based on the indication information A. The response message includes one or more indexes corresponding to the UE 1 (for example, in the foregoing Manner 5.1 or Manner 5.3), or includes one or more indexes corresponding to the UE 1 and a data volume corresponding to each index (for example, in the foregoing Manner 5.1.2 or Manner 5.3.2), or includes one or more indexes corresponding to the UE 1 and a time period corresponding to each index (for example, in the foregoing Manner 5.1.1 or Manner 5.3.1), or includes an index corresponding to the UE 1, a data volume corresponding to each index, and a corresponding time period (for example, a combination of the foregoing manner 5.1.1 and manner 5.1.2, or a combination of the foregoing manner 5.3.1 and manner 5.3.2).

For example, when the indication information A takes a first value (e.g., 00), the response message includes one or more indexes corresponding to the UE 1; when the indication information A takes a second value (e.g., 01), the response message includes one or more indexes corresponding to the UE 1 and a data volume corresponding to each index; when the indication information A takes a third value (e.g., 10), the response message includes one or more indexes corresponding to the UE 1 and a time period corresponding to each index; when the indication information A takes a fourth value (e.g., 11), the response message includes one or more indexes corresponding to the UE 1, a data volume corresponding to each index, and a time period corresponding to each index.

For example, when the query message B includes the indication information A, the response message includes one or more indexes corresponding to the UE 1 and a data volume corresponding to each index; when the query message B does not include the indication information A, the response message includes one or more indexes corresponding to the UE 1 and a time period corresponding to each index. Alternatively, when the query message B includes the indication information A, the response message includes one or more indexes corresponding to the UE 1 and a time period corresponding to each index; when the query message B does not include the indication information A, the response message includes one or more indexes corresponding to the UE 1 and a data volume corresponding to each index.

Optionally, the reporting policy of the access network device may also be specified by a protocol or pre-configured. This embodiment of this application does not impose any limitation on this.

**S540,** the SMF network element obtains, based on one or more indexes corresponding to UE 1, the energy consumption of the access network device used to transmit data of UE 1.

For the sake of convenience in expression, the following will refer to the energy consumption of the access network device used to transmit data of UE 1 as the energy consumption of the access network device.

S540, in an implementation manner, step S540 includes the following steps S541 to S543. This implementation manner is denoted as S540(A).

S541. The SMF network element determines, based on a list corresponding to the access network device, a relationship indicated by each index in one or more indexes corresponding to UE 1.

S542. The SMF network element obtains a data volume corresponding to each of the one or more indexes corresponding to the UE 1.

S543. The SMF network element determines energy consumption of the access network device based on the one or more indexes corresponding to the UE 1 and a data volume corresponding to each index.

For specific implementation of step S541, refer to the description in step S230. Details are not described herein again.

In an example of step S542, the response message includes one or more indexes corresponding to the UE 1 and a data volume corresponding to each index. For example, the access network device sends the response message to the SMF network element in the foregoing manner 5.1.2 or 5.3.2. The SMF network element may obtain the data volume from the response message, and then in step S543, determine the energy consumption of the access network device based on the relationship indicated by each index in the one or more indexes corresponding to the UE 1 and the data volume corresponding to each index.

For example, when the relationship indicated by the index is energy consumption used by the access network device to transmit per unit of data, the SMF network element adds a product of a relationship indicated by each index and a data volume corresponding to the index, to obtain energy consumption of the access network device. For example, if the UE 1 is corresponding to the N indexes, a data volume corresponding to the nth index is Vn, and a relationship indicated by the nth index is En, the SMF network element may obtain the energy consumption of the access network device by means of calculation according to the following formula:, where N is a positive integer greater than or equal to 1, and n is a positive integer greater than or equal to 1 and less than N. For example, a list corresponding to the access network device is Table 1, and the SMF network element receives the response message A and the response message B. Energy consumption of the access network device is $10 ⋅ \left(X+Z+L\right) + 50 ⋅ Y . {Σ}_{n = 1}^{N} {V}_{n} ⋅ {E}_{n}$

When the SMF network element receives multiple response messages, the SMF network element may calculate an energy consumption for each response message according to a formula. Then, the SMF network element adds up the energy consumption corresponding to all the response messages to obtain the total energy consumption. For example, according to the energy consumption data table shown in Table 1, the energy consumption corresponding to the response message A in method 5.1.2 is 10·X+50·Y, and the energy consumption corresponding to the response message B is 10·(Z+L). Therefore, the energy consumption of the access network device is $10 ⋅ X + 50 ⋅ Y + 10 ⋅ \left(Z+L\right) . {Σ}_{n = 1}^{N} {V}_{n} ⋅ {E}_{n}$

In another example of step S542, the SMF network element obtains, from the UPF network element, the data volume corresponding to each index. Optionally, a specific implementation of step S542 may be performed in any one of the following manners.

**In another example of method 5.4,** step S542 includes the following steps S542-a and S542-b (not shown in the figure).

S542-a. The SMF network element sends a request message A to the UPF network element. Correspondingly, the UPF network element receives the request message A from the SMF network element.

Among them, the request message A includes the identifier of UE 1 and information about one or more time periods. The request message A is used to request the data volume of UE 1 within the one or more time periods. The one or more time periods correspond to the one or more indexes corresponding to UE 1.

For example, the response message includes one or more indexes corresponding to UE 1 and information about the time period corresponding to each index. For instance, the access network device sends the response message to the SMF network element in the manner of 5.1.1 or 5.3.1. The SMF network element then carries the information about the one or more time periods in the request message A and sends it to the UPF network element.

For another example, the response message includes one or more indexes corresponding to UE 1. The SMF network element determines a time period corresponding to each index, carries information about the one or more time periods in request message A, and sends request message A to the UPF network element. For example, the SMF network element determines, based on a preconfigured rule, the time period corresponding to each index.

Alternatively, Request message A includes the identifier of session 1 and the information about one or more time periods. Request message A is used to request the data volume of the data transmitted by session 1 within the one or more time periods. For example, request message A is a data packet detection rule (packet detection rule, PDR) update request message, where the PDR includes the identifier of session 1 and the one or more time periods, and it is required to collect statistics on the data volume of session 1 within these time periods.

S542-b: The UPF network element sends, to the SMF network element, the data volume of session 1 within the one or more time periods.

When the request message A includes the identifier of UE 1, the UPF network element determines, based on the association relationship between the identifier of the UE and the session identifier, the identifier of session 1 associated with the identifier of UE 1, and determines the data volume of session 1 in each time period. For a method by which the UPF network element determines the data volume of session 1 in each time period, reference may be made to the prior art. This embodiment of this application does not impose any limitation thereto.

Correspondingly, the SMF network element receives, from the UPF network element, the data volume of session 1 in each time period. The SMF network element then associates the data volume in each time period with the index corresponding to each time period, thereby obtaining the data volume corresponding to each index.

**Method 5.5,** step S542 includes the following steps S542-c and S542-d (not shown in the figure).

S542-c: The SMF network element sends a request message B to the UPF network element. Correspondingly, the UPF network element receives the request message B from the SMF network element.

Among them, request message B includes the identifier of UE 1.

Optionally, the request message B further includes third information used to indicate a time. The third information is the same as the information used to indicate a time and sent by the SMF network element to the AMF network element, for example, the third information is the same as the first information in step S510.

Optionally, the request message B further includes a third period,

In the request message B, the identifier of UE 1 can be replaced with the identifier of session 1. For example, the request message B is a PDR update request message. Specific implementation can refer to step S542-a.

S542-d: The UPF network element sends the data volume of session 1 in each third period to the SMF network element.

For example, in the response message B sent by the UPF network element to the SMF network element, the response message B includes the data volume of session 1 in each third period.

When request message B includes the identifier of UE 1, the UPF network element determines, based on an association between UE identifiers and session identifiers, the identifier of session 1 associated with the identifier of UE 1.

The third period is a period used by the UPF network element to determine the data volume of session 1. That is, the UPF network element determines the data volume of session 1 using the third period as a unit, and each time determines the data volume of session 1 within one third period. The third period is associated with the second period in which the access network device determines the energy consumption index corresponding to the terminal device. For example, the second period is a positive integer multiple of the third period. Request message B includes the third period, or the UPF network element determines the third period according to a preconfigured rule.

In an implementation, the UPF network element sends, to the SMF network element, the data volume of session 1 in each third period in the statistical time period. The UPF network element may determine the statistical time period based on the third information, or may determine the statistical time period based on a preconfigured rule. For a specific method, refer to the method in which the access network device determines the statistical time period based on the second information in step S530. Details are not described herein again.

For example, the statistical time period is from 8:00 to 9:00, the third period is 15 minutes, and the UPF network element collects statistics on the data volume of session 1 in session 1 from 8:00 to 8:15, from 8:15 to 8:30, from 8:30 to 8:45, and from 8:45 to 9:00, respectively, as X bits, Y bits, Z bits, and L bits. Then, the UPF network element sends a response message B to the SMF network element, including X bits, Y bits, Z bits, and L bits.

Optionally, the response message B further includes a time period corresponding to each data volume. For example, the response message B includes the following Table 6.

**Table 6**

| Time Period | Data Volume (Unit: bit) |
|---|---|
| 8:00 AM to 8:15 AM | X |
| 8:15 AM to 8:30 AM | Y |
| 8:30 AM to 8:45 AM | Z |
| 8:45 AM to 9:00 AM | L |

In another implementation, the UPF network element sends a data volume to the SMF network element once every fourth period. Each sent data volume includes the data volume of session 1 determined by the UPF network element within the fourth period. Request message B includes the fourth period, or the UPF network element determines the fourth period based on a preconfigured statistical policy.

For example, if the third period is 15 minutes and the fourth period is 30 minutes, the UPF network element may determine that the data volumes of session 1 from 8:00 AM to 8:15 AM and from 8:15 AM to 8:30 AM are X bits and Y bits, respectively, and send the following Table 7-1 to the SMF network element; and then determine that the data volumes of session 1 from 8:30 AM to 8:45 AM and from 8:45 AM to 9:00 AM are Z bits and L bits, respectively, and send the following Table 7-2 to the SMF network element.

**Table 7-1**

| Time Period | Data Volume (Unit: bit) |
|---|---|
| 8:00 AM to 8:15 AM | X |
| 8:15 AM to 8:30 AM | Y |

**Table 7-2**

| Time Period | Data Volume (Unit: bit) |
|---|---|
| 8:30 AM to 8:45 AM | Z |
| 8:45 AM to 9:00 AM | L |

Correspondingly, the SMF network element receives, from the UPF network element, the data volume of session 1 in each third cycle, and determines, based on the time period, the correspondence between the data volume and the energy consumption index in the response message A. That is, the correspondence between the data volume and the energy consumption index in the time period corresponding to the same time period is determined. For example, when the response message A includes Table 2 and Table 3, the SMF network element determines that the data volume corresponding to the energy consumption index a is X+Z+L bits, and the data volume corresponding to the energy consumption index b is Y bits.

Among them, the response message B includes a time period corresponding to each data volume. Then, the SMF network element can obtain, based on the response message B, the time period corresponding to each data volume. Alternatively, the SMF network element determines, based on the third cycle and the statistical time period, or the third cycle and the fourth cycle, the time period corresponding to each data volume, and then determines, based on the time period, the data volume corresponding to each energy consumption index in response message A.

Steps S542-c and S542-d may be performed after the SMF network element determines to collect the network-side energy consumption value corresponding to UE 1 or session 1, and determines to execute at any time point after the statistical period. For example, after step S440, in which the SMF network element receives a response message. Another example is after or simultaneously with step S510, in which the SMF network element sends a query message A to the AMF network element. Another example is before the SMF network element sends a query message A to the AMF network element.

When the SMF network element obtains the data volume of session 1 from the UPF network element, and the response message also includes the data volume corresponding to each energy consumption index, then the data volume in the response message may be different from the data volume from the UPF network element. The SMF network element may take the data volume in the response message as the standard, or the SMF network element may process the data volume in the response message and the data volume from the UPF network element to obtain a result (such as an average value or a maximum value), and send the result to the energy consumption network element.

When there are multiple sessions between UE 1 and one or more UPF network elements, the SMF network element may obtain, according to the foregoing step S542, the data volume of each session of UE 1 from the one or more UPF network elements, and then comprehensively consider the data volume of each session to obtain the data volume corresponding to each energy consumption index.

After the SMF network element obtains the data volume corresponding to each index from the UPF network element, it further proceeds to step S543. In step S543, the SMF network element determines the energy consumption of the access network device based on the relationship indicated by each index in one or more indexes corresponding to the UE 1, as well as the data volume corresponding to each index. For example, the energy consumption of the access network device can be calculated according to a formula. For example, the response message received by the SMF network element includes response message A including Table 2 and response message B including Table 3. The SMF network element obtains from the UPF network element that the data volume corresponding to the time period from 8:00 to 8:15 is X bits, the data volume corresponding to the time period from 8:15 to 8:30 is Y bits, the data volume corresponding to the time period from 8:30 to 8:45 is Z bits, and the data volume corresponding to the time period from 8:45 to 9:00 is L bits. The SMF network element can then further calculate, in combination with Table 1, that the energy consumption of the access network device is $10 ⋅ \left(X+Z+L\right) + 50 ⋅ Y . {Σ}_{n = 1}^{N} {V}_{n} ⋅ {E}_{n}$

The above-mentioned SMF network element obtaining the data volume corresponding to each time period can be replaced with the following: the SMF network element obtains the data rate corresponding to each time period, and calculates the data volume corresponding to each time period based on the data rate corresponding to each time period and the duration of each time period.

In another implementation, step S540 includes the following steps S544 to S546.

S544. The SMF network element obtains the data volume corresponding to each index in one or more indexes corresponding to UE 1.

In a specific implementation of step S544, refer to the above step S542. Details are not described herein again.

S545. The SMF network element sends, to the energy consumption network element, one or more indexes corresponding to UE 1, and a data volume corresponding to each index. Correspondingly, the energy consumption network element receives, from the SMF network element, one or more indexes corresponding to UE 1, and a data volume corresponding to each index.

S546. The energy consumption network element sends the energy consumption of the access network device to the SMF network element. Correspondingly, the SMF network element receives the energy consumption of the access network device from the energy consumption network element.

For example, the energy consumption network element queries the list corresponding to the access network device based on one or more indexes corresponding to UE 1, and determines the relationship indicated by each index. Then, based on the relationship indicated by each index and the data volume corresponding to each index, the energy consumption of the access network device is determined. For specific implementation, refer to the foregoing steps S541 and step S543. Details are not described herein again.

Optionally, the communication method 500 further includes the following steps S550 to S570 (not shown in the figure).

S550. The SMF network element triggers the PCF network element to update a policy related to data transmission. Correspondingly, under the trigger of the SMF network element, the PCF network element updates the policy related to data transmission.

S560. The PCF network element sends an updated policy related to data transmission to the SMF network element. Correspondingly, the SMF network element receives the updated policy related to data transmission from the PCF network element.

S570. The SMF network element sends an updated policy related to data transmission to the access network device. Correspondingly, the access network device receives the updated policy related to data transmission from the SMF network element.

The access network device may perform data transmission according to the updated policy.

For the specific implementation of steps S550 to S570, refer to steps S240 to S260. This will not be further elaborated here.

In the embodiments of this application, the access network device sends one or more indexes corresponding to UE 1 to the SMF network element. The SMF network element obtains, based on the one or more indexes corresponding to UE 1, the energy consumption of the access network device used to transmit data of UE 1, so that the SMF network element can further understand, from the perspective of energy consumption, the situation of data transmission related to UE 1, and can also perform corresponding processing, which is beneficial to data transmission of UE 1. Further, the SMF network element may trigger the PCF network element to update a policy related to data transmission of UE 1, and then send the updated policy related to data transmission of UE 1 to the access network device, so that the access network device can transmit data of UE 1 according to the updated policy, which helps the access network device provide high-quality data transmission services for UE 1. Further, when the energy consumption of the access network device used to transmit the data is excessively high, the SMF network element triggers the PCF network element to update the policy, for example, enabling an energy saving mode or reducing energy consumption related to data transmission, which is helpful for implementing network energy saving.

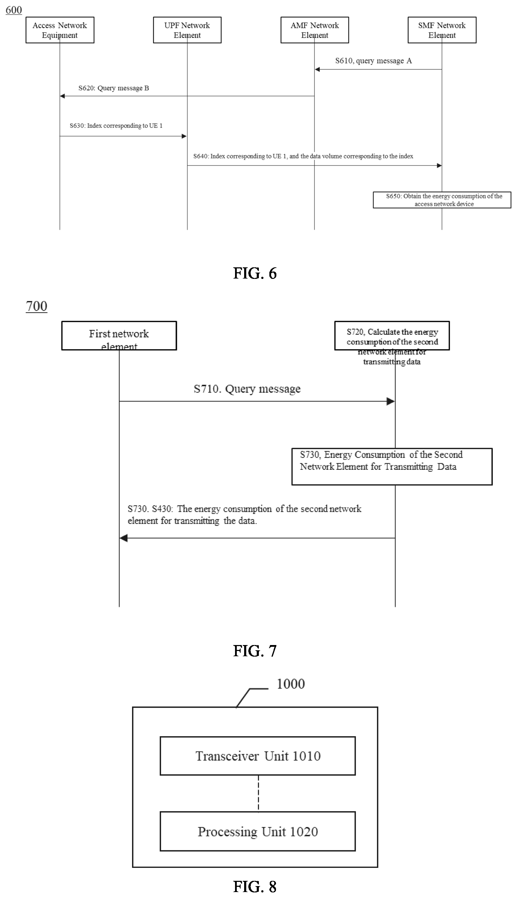

Figure 6 is a schematic flowchart illustrating another communication method 600 provided by an embodiment of this application. The communication method 600 is similar to the communication method 500, and the difference lies in that, in the communication method 500, the access network device sends, through control, an index corresponding to UE 1 to the SMF network element. However, in the communication method 600, the access network device sends, through the user plane, the index corresponding to UE 1 to the SMF network element. As shown in Figure 6, the communication method 600 includes the following multiple steps, and for parts not described in detail, refer to descriptions in existing protocols, and in the communication methods 200 and 500.

**S610,** the SMF network element sends a query message A to the AMF network element.

**S620,** the AMF network element sends a query message B to the access network device.

Step S610 and S620 can be specifically implemented by referring to the descriptions of steps S510 and S520. Details are not described herein again.

**S630,** the access network device sends a response message to the UPF network element, where the response message includes one or more indexes corresponding to UE 1. Correspondingly, the UPF network element receives the response message from the access network device.

The access network device may send the response message to the UPF network element based on the uplink tunnel information allocated by the UPF network element to the session of the UE 1.

The response message further includes at least one of the following information: a time period corresponding to each index, or a data volume corresponding to each index.

Optionally, the response message further includes identification information of the access network device.

In the following, that the access network device sends the response message to the UPF network element is referred to as sending, by the access network device, the energy consumption information by using the user plane. That the access network device sends the response message by using the AMF network element in step S530 is referred to as sending, by the access network device, the energy consumption information by using the control plane.

Optionally, the access network device sends the response message to the UPF network element based on the indication information B in the query message B. The indication information B is used to indicate a sending path of the energy consumption information, that is, used to indicate whether the access network device sends the energy consumption information by using a control plane or by using a user plane.

In one example, when the indication information B has a value of a first value (e.g., 0), the indication information B is used to indicate that the energy consumption information is to be sent through the user plane. In this case, the access network device sends a response message to the UPF network element. When the indication information B has a value of a second value (e.g., 1), the indication information B is used to indicate that the energy consumption information is to be sent through the control plane. In this case, the access network device sends a response message to the AMF network element according to step S530.

In another example, when the request message B includes the indication information B, the access network device sends the energy consumption information through the user plane. When the request message B does not include the indication information B, the access network device sends the energy consumption information through the control plane. Alternatively, when the request message B includes the indication information B, the access network device sends the energy consumption information through the control plane. When the request message B does not include the indication information B, the access network device sends the energy consumption information through the user plane.

Optionally, the access network device may determine a manner of sending the energy consumption information based on the name of the request message B. For example, when the request message B is a user plane energy consumption information reporting request message, the access network device sends the energy consumption information through the user plane. When the request message B is a control plane energy consumption information reporting request message, the access network device sends the energy consumption information through the control plane.

The access network device can distinguish energy consumption information from other user plane data through the message name or message type. For example, if the response message is an energy consumption information reporting message, the UPF network element can identify the energy consumption information through the message name or message type, and then in step S640, send the response message to the SMF network element.

For the detailed implementation method of the access network device sending a response message to the UPF network element, please refer to the description of step S530.

**S640,** The UPF network element sends one or more indexes corresponding to UE 1 and a data volume corresponding to each index to the SMF network element. Correspondingly, the SMF network element receives one or more indexes corresponding to UE 1 and a data volume corresponding to each index from the UPF network element.

When the response message includes the data volume corresponding to each index, the UPF network element may send the one or more indexes corresponding to UE 1 and the data volume corresponding to each index in the response message to the SMF network element.

When the response message includes the time period corresponding to each index, the UPF network element may determine the data volume corresponding to each time period, that is, the data volume corresponding to each index. Subsequently, the UPF network element sends one or more indexes corresponding to UE 1 and the data volume corresponding to each index to the SMF network element.

The UPF network element further sends identification information of the access network device to the SMF network element. For example, the UPF network element sends, to the SMF network element, the identification information of the access network device included in the response message.

The UPF network element may identify the energy consumption information of the terminal device from the user plane data sent by the access network device. For example, the UPF network element may distinguish the energy consumption information of the terminal device from other user plane data based on the message name or message type. The UPF network element may also identify the energy consumption information of the terminal device through other methods. This embodiment of this application does not impose any limitation thereto.

**S650,** the SMF network element obtains, based on one or more indexes corresponding to UE 1 and each index corresponding to a data volume, the energy consumption of the access network device used to transmit data of UE 1.

For the specific implementation of step S650, reference may be made to the description of step S540. The difference from step S540 is that the SMF network element has already obtained, in step S640, the data volume corresponding to each index for the data of UE 1, so the SMF network element does not need to obtain again from the UPF network element the data volume corresponding to each index for the data of UE 1.

Optionally, the communication method 600 further includes steps S550 to S570.

In the embodiments of this application, the access network device sends one or more indexes corresponding to the data of UE 1 to the UPF network element. Then, the SMF network element obtains, based on the one or more indexes received from the UPF network element and the data volume corresponding to each index, the energy consumption of the access network device for transmitting the data of UE 1, so that the SMF network element can further understand, from the perspective of energy consumption, the data transmission status of UE 1, which is beneficial to the data transmission of UE 1. Further, the SMF network element may trigger the PCF network element to update a policy related to data transmission of UE 1, and then send, to the access network device, the updated policy related to data transmission of UE 1, so that the access network device can transmit the data of UE 1 based on the updated policy, which helps the access network device better provide a data transmission service for UE 1, and ensure the quality of data transmission. Further, when the energy consumption of the access network device for transmitting the data of UE 1 is excessively high, the SMF network element may trigger the PCF network element to update the policy, for example, enabling an energy saving mode or reducing energy consumption related to data transmission, which is helpful for implementing network energy saving.

It should be noted that in the foregoing communication method 500 and communication method 600, the SMF network element may be replaced with an NWDAF network element. In this implementation, the foregoing "the SMF network element sends to the UPF network element" may be replaced with "the NWDAF network element sends to the UPF network element", or "the NWDAF network element sends to the UPF network element through the SMF network element". The foregoing "the SMF network element receives from the UPF network element" may be replaced with "the NWDAF network element receives from the UPF network element", or "the NWDAF network element receives from the UPF network element through the SMF network element". The foregoing "the UPF network element sends to the SMF network element", "the UPF network element receives from the SMF network element", or "the UPF network element receives from the SMF network element" may be replaced in a similar manner, and details are not described herein again.

FIG. 7 is a schematic flowchart of still another communication method 700 according to an embodiment of this application. Different from the communication method 200, 500, and 600, in the communication method 700, the second network element calculates and sends energy consumption used by the second network element to transmit data. As shown in FIG. 7, the communication method 700 may be performed by a first network element and a second network element, or may be performed by a module and/or a component (for example, a chip or an integrated circuit) that are installed in the first network element and the second network element and have corresponding functions. This is not limited in this application. For ease of description, the following uses the first network element and the second network element as execution bodies for description. For a part not described in detail, refer to an existing protocol. The communication method 700 may be applied to the network architecture 100 shown in FIG. 1. For example, the first network element is an SMF network element 139, and the second network element is an access network device in the (R)AN 120. As shown in FIG. 7, the communication method 700 includes the following multiple steps.

**S710. The first network element sends a query message to the second network element, and correspondingly, the second network element receives the query message from the first network element.**

The query message is used to query the energy consumption information used by the second network element to transmit data, and the data includes data related to the terminal device.

Optionally, the query message includes identification information of the terminal device.

For specific implementation of step S710, refer to the description of step S210. Details are not described herein again.

**S720. The second network element calculates, according to the index, energy consumption used by the second network element to transmit the data, where the index indicates a relationship between the data and the data and the energy consumption used by the second network element to transmit the data.**

For example, the second network element determines an index corresponding to the terminal device, and calculates, based on a relationship indicated by the index and a data volume of the data, energy consumption used by the second network element to transmit the data.

For example, the second network element may determine the index corresponding to the terminal device based on one or more of the following parameters: a distance between the terminal device and the second network element, channel quality between the terminal device and the second network element, transmit power of the second network element, a modulation order of data, a quantity of data retransmission times, and used for transmission a form of a carrier of the data, or a quantity of beams or DRBs used by the second network element to transmit data of the terminal device. For specific implementation, reference may be made to the description in step S220, and details are not described herein again.

After the second network element determines the index corresponding to the terminal device, and before the second network element calculates, by the second network element, energy consumption used by the second network element to transmit the data, the communication method 700 further includes: querying, by the second network element, a list corresponding to the second network element according to the index, to determine the relationship, that is, the second network element queries the list corresponding to the second network element. determining a relationship indicated by the index, where at least one index in the list corresponding to the second network element indicates the relationship.

In an example, the second network element obtains, from the fourth network element based on the identification information of the second network element, the list corresponding to the second network element. For specific implementation, refer to steps S231 and S232. In another example, the second network element obtains the relationship indicated by the index from the fourth network element based on the identification information of the second network element and the index. For specific implementation, refer to steps S232-a and S233-a and S232-a. In still another example, if the second network element locally stores the list, the second network element may query the local list based on the index, to determine the relationship indicated by the index. Alternatively, the second network element may query the locally stored list to determine the relationship when the locally stored list is valid, and then obtain the list corresponding to the second network element or obtain the relationship indicated by the index from the fourth network element when the locally stored list expires. For specific implementation, reference may be made to step S234. Details are not described herein again.

After the second network element determines the index corresponding to the terminal device, and before the second network element calculates the energy consumption used by the second network element to transmit the data based on the index, the communication method 700 further includes: the second network element obtaining the data volume of the data. For example, when the index corresponds to a first time period, the data volume is the data volume of the data related to the terminal device that is transmitted by the second network element in the first time period. The index corresponding to the first time period may be that the index is determined by the second network element based on the value of the index in the first time period according to one or more of the foregoing parameters. For specific implementation of obtaining the data volume of the data by the second network element, reference may be made to an existing protocol.

After the second network element determines the relationship indicated by the index and obtains the data volume of the data, it may calculate the energy consumption used by the second network element to transmit the data based on the relationship indicated by the index and the data volume of the data. For example, when the relationship indicated by the index includes the energy consumption used by the second network element to transmit each unit of the data, the energy consumption used by the second network element to transmit the data may be equal to the product of the data volume of the data and the energy consumption used by the second network element to transmit each unit of the data.

**S730,** the second network element sends, to the first network element, the energy consumption of the second network element used to transmit the data. Correspondingly, the first network element receives, from the second network element, the energy consumption of the second network element used to transmit the data.

In this embodiment of this application, the second network element, triggered by the first network element, calculates the energy consumption of the second network element used to transmit the data, and sends the energy consumption to the first network element. In this way, the second network element can further understand, from the perspective of energy consumption, the situation of data transmission related to UE 1, and can also perform corresponding processing, which is beneficial to data transmission of UE 1.

Optionally, the communication method 700 further includes the following steps S240 to S260. Based on this embodiment, the first network element triggers, based on the energy consumption of the second network element used to transmit the data, an update of a policy related to data transmission, so that the second network element can perform data transmission according to the updated policy, which helps the second network element provide a high-quality data transmission service for the terminal device from the perspective of energy consumption. Further, in a case in which the energy consumption of the second network element used to transmit the data is excessively high, the first network element triggers the policy control network element to update the policy, for example, enabling an energy saving mode or reducing energy consumption related to data transmission, which is conducive to implementing network energy saving.

FIG. 8 is a schematic structural diagram of a communication apparatus 1000 according to an embodiment of this application. As shown in FIG. 8, the apparatus 1000 may include a transceiver unit 1010 and a processing unit 1020. The transceiver unit 1010 may implement a corresponding communication function. The processing unit 1020 is configured to perform data processing, or in other words, the transceiver unit 1010 is configured to perform operations related to receiving and sending, and the processing unit 1020 is configured to perform operations other than receiving and sending. The transceiver unit 1010 may also be referred to as a communication interface or a communication unit.

In a possible design, the communication apparatus 1000 may correspond to the first network element in the method embodiment described above, or may be a component (for example, a chip) of the first network element.

The communication apparatus 1000 may implement steps or processes corresponding to the steps performed by the first network element in the method embodiment described above. The transceiver unit 1010 may be configured to perform operations related to receiving and sending performed by the first network element in the method embodiment described above. The processing unit 1020 may be configured to perform operations related to internal processing performed by the first network element in the method embodiment described above.

For example, the transceiver unit 1010 is configured to send a query message, where the query message is used to query energy consumption information used by the second network element to transmit data, and the data includes data related to a terminal device; the transceiver unit 1010 is further configured to receive a response to the query message, where the response includes an index, and the index indicates a relationship between the energy consumption used by the second network element to transmit the data and the data; and the processing unit 1020 is configured to obtain, based on the index, the energy consumption used by the second network element to transmit the data.

Among them, when the apparatus 1000 is configured to perform the method in FIG. 2, the transceiver unit 1010 may be configured to perform the step of receiving and sending information in the method, such as steps S210 and S220; the processing unit 1020 may be configured to perform the internal processing step in the method, such as step S230.

Among them, when the apparatus 1000 is configured to perform the method in FIG. 4, the transceiver unit 1010 may be configured to perform the step of receiving and sending information in the method, such as steps S410 and S430; the processing unit 1020 may be configured to perform the internal processing step in the method.

Among them, when the apparatus 1000 is configured to perform the method in FIG. 5, the transceiver unit 1010 may be configured to perform the step of receiving and sending information in the method, such as steps S510, S530, S545, and S546; the processing unit 1020 may be configured to perform the internal processing step in the method, such as S541, S542, S543, and S544.

Among them, when the apparatus 1000 is configured to perform the method in FIG. 6, the transceiver unit 1010 may be configured to perform the step of receiving and sending information in the method, such as steps S610 and S640; the processing unit 1020 may be configured to perform the internal processing step in the method, such as S650.

Among them, when the apparatus 1000 is configured to perform the method in FIG. 7, the transceiver unit 1010 may be configured to perform the step of receiving and sending information in the method, such as steps S710 and S730; the processing unit 1020 may be configured to perform the internal processing step in the method.

It should be understood that for a specific process in which each unit performs the foregoing steps, refer to the descriptions of the foregoing embodiments, and details are not described herein again.

In another possible design, the communication apparatus 1000 may correspond to the third network element performing steps or processes in the method embodiment described above, or the communication apparatus 1000 may correspond to a component (such as a chip) of the third network element.

The communication apparatus 1000 may implement steps or processes performed by the third network element corresponding to the method embodiment described above. The transceiver unit 1010 may be configured to perform operations related to receiving and sending by the third network element in the method embodiment described above. The processing unit 1020 may be configured to perform operations related to internal processing by the third network element in the method embodiment described above.

For example, the transceiver unit 1010 is configured to receive an index from a first network element, where the index indicates a relationship between energy consumption of the second network element for transmitting data and the data, and the data includes data related to a terminal device. The processing unit 1020 is configured to determine, based on the relationship indicated by the index, energy consumption of the second network element for transmitting the data. The transceiver unit 1010 is further configured to send, to the first network element, the energy consumption of the second network element for transmitting the data.

Among them, when the apparatus 1000 is used to perform the method in Figure 4, the transceiver unit 1010 may be used to perform the steps of receiving and transmitting information in the method, such as steps S410 and S430. The processing unit 1020 may be used to perform the internal processing steps in the method, such as step S420.

In another possible design, when the apparatus 1000 is used to perform the method in FIG. 5, the transceiver unit 1010 may be used to perform the steps of receiving and transmitting information in the method, such as steps S545 and S546; the processing unit 1020 may be used to perform the internal processing steps in the method.

It should be understood that for a specific process in which each unit performs the foregoing steps, refer to the descriptions of the foregoing embodiments. Details are not described herein again.

In another possible design, the communication apparatus 1000 may correspond to the second network element in the method embodiment in the foregoing figure, or may be a component (for example, a chip) of the second network element.

The communication apparatus 1000 may implement the steps or processes performed by the second network element in the method embodiment corresponding to the foregoing figure. The transceiver unit 1010 may be used to perform the receiving and transmitting related operations of the second network element in the method embodiment corresponding to the foregoing figure, and the processing unit 1020 may be used to perform the internal processing related operations of the second network element in the method embodiment corresponding to the foregoing figure.

For example, the transceiver unit 1010 is configured to receive a query message, where the query message is used to query energy consumption information used by the second network element to transmit data, and the data includes data related to a terminal device; and the transceiver unit 1010 is further configured to send a response to the query message, where the response includes an index, and the index indicates a relationship between the energy consumption used by the second network element to transmit the data and the data.

For example, the transceiver unit 1010 is configured to receive a query message from the first network element. The query message is used to query the energy consumption information of the second network element for transmitting data. The data includes data related to the terminal device. The processing unit 1020 is configured to calculate, based on an index, the energy consumption of the second network element for transmitting the data. The index indicates the relationship between the energy consumption of the second network element for transmitting the data and the data. The transceiver unit 1010 is further configured to send the energy consumption of the second network element for transmitting the data to the first network element.

Among them, when the apparatus 1000 is configured to perform the method in FIG. 2, the transceiver unit 1010 may be configured to perform the step of receiving and sending information in the method, such as step S210 and step S220. The processing unit 1020 may be configured to perform the internal processing step in the method.

When the apparatus 1000 is configured to perform the method in FIG. 5, the transceiver unit 1010 may be configured to perform steps of sending and receiving information in the method, for example, steps S520 and S530. The processing unit 1020 may be configured to perform internal processing steps in the method.

When the apparatus 1000 is configured to perform the method in FIG. 6, the transceiver unit 1010 may be configured to perform steps of sending and receiving information in the method, for example, steps S620 and S630. The processing unit 1020 may be configured to perform internal processing steps in the method.

When the apparatus 1000 is configured to perform the method in FIG. 7, the transceiver unit 1010 may be configured to perform steps of sending and receiving information in the method, for example, steps S710 and S730. The processing unit 1020 may be configured to perform internal processing steps in the method, for example, S720.

It should be understood that the apparatus 1000 herein is embodied in a form of a functional unit. The term "unit" herein may refer to an application specific integrated circuit (ASIC), an electronic circuit, a processor for executing one or more software or firmware programs (e.g., shared processor, proprietary processor, or group processor, etc.) and memory, merge logic, and/or other suitable components that support the described functions. In an optional example, the transceiver unit 1010 may alternatively be a transceiver circuit (for example, may include a receiving circuit and a sending circuit), and the processing unit 1020 may be a processing circuit.

The apparatus 1000 of each of the foregoing solutions has the function of implementing the corresponding steps performed by the network element (such as the first network element, the third network element, or the second network element) in the foregoing method. This function can be implemented by hardware, or can be implemented by hardware executing corresponding software. The hardware or software includes one or more modules corresponding to the foregoing function. For example, the transceiver module may be replaced by a transceiver (for example, a sending unit in the transceiver module may be replaced by a transmitter, and a receiving unit in the transceiver module may be replaced by a receiver). Other units, such as a processing module, may be replaced by a processor, to separately perform the receiving and sending operations and related processing operations in the method embodiments above.

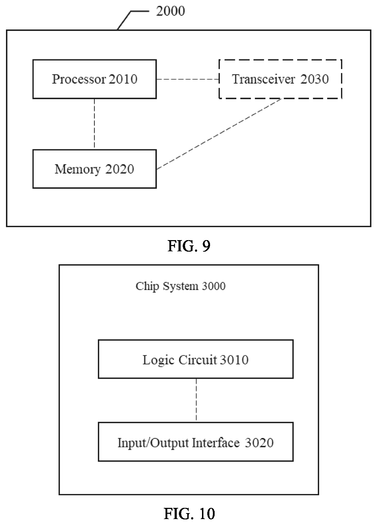

FIG. 9 is a schematic diagram of another communications apparatus 2000 according to an embodiment of this application. The apparatus 2000 includes one or more processors 2010 and one or more memories 2020. The processor 2010 is configured to execute the computer program or instructions stored in the memory 2020, or read the data/signaling stored in the memory 2020, to perform the method in the method embodiments above. The memory 2020 is configured to store the computer program or instructions and/or data. The memory 2020 may be integrated with the processor 2010, or may be disposed separately.

Optionally, as shown in FIG. 9, the apparatus 2000 further includes a transceiver 2030, and the transceiver 2030 is configured to receive and/or send a signal. For example, the processor 2010 is configured to control the transceiver 2030 to receive and/or send a signal.

In a solution, the apparatus 2000 is configured to implement operations performed by the first network element in the foregoing method embodiments.

In another solution, the apparatus 2000 is configured to implement operations performed by the third network element in the foregoing method embodiments.

In still another solution, the apparatus 2000 is configured to implement operations performed by the second network element in the foregoing method embodiments.

It should be understood that the processor mentioned in the embodiments of this application may be a central processing unit (central processing unit, CPU), or may be another general-purpose processor, a digital signal processor (digital signal processor, DSP), or an application specific integrated circuit (application specific integrated circuit). ASIC), field programmable gate array (field programmable gate array, FPGA) or other programmable logic devices, discrete gates or transistor logic devices, discrete hardware components, and the like. The general-purpose processor may be a microprocessor, or the processor may be any conventional processor, or the like.

It should be further understood that the memory mentioned in the embodiments of this application may be a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM). For example, the RAM may be used as an external cache. By way of example but not limitation, the RAM includes multiple forms, such as a static random-access memory (SRAM), a dynamic random-access memory (DRAM), a synchronous dynamic random-access memory (SDRAM), a double data rate synchronous dynamic random-access memory (DDR SDRAM), an enhanced synchronous dynamic random-access memory (ESDRAM), a synchlink dynamic random-access memory (SLDRAM), and a direct Rambus random-access memory (DR RAM).

It should be noted that when the processor is a general-purpose processor, a DSP, an ASIC, an FPGA, or another programmable logic device, discrete gate, or transistor logic device, discrete hardware component, the memory (storage module) may be integrated into the processor. It should also be noted that the memory described in this specification is intended to include but not limited to these and any other memory of a suitable type.

FIG. 10 is a schematic diagram of a chip system 3000 according to an embodiment of this application. The chip system 3000 (or may also be referred to as a processing system) includes a logic circuit 3010 and an input/output interface (input/output interface) 3020.

Among them, the logic circuit 3010 may be a processing circuit in the chip system 3000. The logic circuit 3010 may be coupled to a storage unit, and invoke an instruction in the storage unit, so that the chip system 3000 can implement the methods and functions in the embodiments of this application. The input/output interface 3020 may be an input/output circuit in the chip system 3000, and is configured to output information processed by the chip system 3000, or input data or signaling information to be processed into the chip system 3000 for processing.

As a solution, the chip system 3000 is configured to implement the operations performed by the first network element, the third network element, or the second network element in the method embodiments described above. For example, the logic circuit 3010 is configured to implement the internal processing-related operations performed by the first network element, the third network element, or the second network element in the method embodiments described above. The input/output interface 3020 is configured to implement the sending and/or receiving-related operations performed by the first network element, the third network element, or the second network element in the method embodiments described above.

The explanations and beneficial effects of the relevant content in any one of the devices provided above can refer to the corresponding method embodiments provided above. These explanations and beneficial effects will not be repeated here.

In several embodiments provided in this application, it should be understood that the disclosed apparatus and methods may be implemented by other means. For example, the apparatus embodiments described above are merely illustrative. For example, the division of the units is merely a logical function division, and there may be another division in actual implementation. For example, a plurality of units or components may be combined or integrated into another system, or some features may be ignored or not performed. In addition, the mutual couplings or direct couplings or communication connections that are displayed or discussed between the apparatuses may be implemented through some interfaces. The indirect couplings or communication connections between the apparatuses or units may be implemented in the form of electrical, mechanical, or other forms.

An embodiment of this application further provides a communications system, including a first network element and a second network element, where the first network element is configured to implement operations performed by the first network element in the foregoing method embodiments, and the second network element is configured to implement operations performed by the second network element in the foregoing method embodiments. Optionally, the communications system further includes a third network element, where the third network element is configured to implement operations performed by the third network element in the foregoing method embodiments.

An embodiment of this application further provides a computer readable storage medium. The computer readable storage medium stores a computer instruction used to implement the method performed by the first network element, the third network element, or the second network element in the foregoing method embodiments. For example, when the computer program is executed by a computer, the computer can implement the method executed by the first network element, the third network element, or the second network element in the foregoing method embodiments.

All or some of the foregoing embodiments may be implemented by using software, hardware, firmware, or any combination thereof. When implemented by using software, all or some of the applications may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium, or transmitted from one computer-readable storage medium to another computer-readable storage medium, for example, the computer instructions may be wired from a website site, computer, server, or data center (e.g. coaxial cable, fiber optics, digital subscriber line (DSL)) or wireless (e.g., infrared, wireless, microwave) transmission to another website site, computer, server, or data center. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD), or the like). For example, the foregoing usable medium includes but is not limited to any medium that can store program code, such as a USB flash drive, a removable hard disk, a ROM, a RAM, a magnetic disk, or an optical disc.

To facilitate understanding of the embodiments of this application, the following explanations are provided.

First, in the various embodiments of this application, unless otherwise specified or there is a logical conflict, the terms and/or descriptions in different embodiments are consistent and can be mutually referenced. The technical features in different embodiments can be combined to form a new embodiment according to an inherent logical relationship thereof.

Second, in the embodiments of this application, "a plurality of" refers to two or more. "And/or" describes an association relationship between associated objects, and indicates that three relationships may exist. For example, A and/or B may indicate the following cases: A exists alone, both A and B exist, and B exists alone. In these cases, A and B may be singular or plural. In the text description of this application, the character "/" generally indicates that an association relationship between the associated objects is an "or" relationship.

Third, in the embodiments of this application, "first," "second," and various numerical identifiers (for example, #1 and #2), are used to distinguish between different objects for ease of description, and are not intended to limit the scope of the embodiments of this application. For example, the objects are distinguished as different messages, rather than being used to describe a specific sequence or order. It should be understood that the objects described in this way can be interchanged in appropriate circumstances, so that solutions other than the embodiments of this application can be described.

Fourth, in the embodiments of this application, descriptions such as "when...," "in the case of...," and "if" all refer to a situation in which a device performs corresponding processing under certain objective circumstances. These descriptions do not limit the time, nor do they require that the device must perform a judgment action when implementing the processing. Nor do they imply the existence of other limitations.

Five, in the embodiments of this application, the terms "include" and "have" and any of their variations are intended to cover non-exclusive inclusion. For example, a process, method, system, product, or device that includes a series of steps or units is not necessarily limited to those clearly listed steps or units, but may also include steps or units that are not clearly listed or that are inherent to these processes, methods, products, or devices.

Six, in the embodiments of this application, "used to indicate" may include being used to directly indicate and being used to indirectly indicate. When it is described that a certain piece of indication information A is used to indicate A, it may include that the indication information A directly indicates A or indirectly indicates A, but it does not necessarily mean that the indication information A must carry A.

The indication manners in the embodiments of this application should be understood as covering various methods that can enable the to-be-indicated party to learn of the to-be-indicated information A. The to-be-indicated information A may be sent together as a whole, or may be divided into a plurality of pieces of sub information and sent separately. In addition, sending periods and/or sending moments of the sub information may be the same or different. A specific sending method is not limited in this application.

In this embodiment of this application, the "indication information A" may be an explicit indication, that is, the indication information A may be directly indicated by using signaling, or may be obtained by using a parameter indicated by the signaling, with reference to another rule, with reference to another parameter, or with reference to derivation. It may also be implicitly indicated, that is, obtained according to a rule or relationship, or according to another parameter, or inferred. This is not specifically limited in this application.

7. In this embodiment of this application, "storage" may mean storing in one or more memories. The one or more memories may be separately disposed, or may be integrated into an encoder, a decoder, a processor, or a communications apparatus. Alternatively, some of the one or more memories may be separately disposed, and some of the memories may be integrated into a decoder, a processor, or a communications apparatus. A type of the memory may be a storage medium in any form. This is not limited in this application.

8. In the embodiments of this application, "communication" may also be described as "data transmission," "information transmission," "data processing," etc. "Transmission" includes "sending" and "receiving." This application does not impose any limitations on this.

As described above, the content of this application is merely a specific implementation of this application. However, the protection scope of this application is not limited thereto. Any person skilled in the art of this technology, within the technical scope disclosed in this application, can easily think of variations or replacements, all of which should be covered within the protection scope of this application. Therefore, the protection scope of this application shall be determined according to the protection scope of the claims described above.

## Claims

1. A communication method, comprising:
sending, by a first network element, a query message, wherein the query message is used to query energy consumption information of a second network element for transmitting data, and the data comprises data related to a terminal device;
receiving, by the first network element, a response to the query message, wherein the response includes an index, and the index indicates a relationship between the energy consumption of the second network element for transmitting the data and the data;
obtaining, by the first network element, based on the index, the energy consumption of the second network element for transmitting the data.

2. The method according to claim 1, wherein the energy consumption of the second network element for transmitting the data is determined based on the relationship indicated by the index and the data volume of the data.

3. The method according to claim 2, wherein the relationship indicated by the index includes the energy consumption of the second network element for transmitting each unit of the data.

4. The method according to claim 3, wherein the energy consumption of the second network element for transmitting the data is equal to a product of the data volume and the energy consumption used by the second network element to transmit each unit of the data.

5. The method according to any one of claims 1 to 4, wherein the obtaining, by the first network element, the energy consumption of the second network element for transmitting the data based on the index includes:
sending, by the first network element, the index to the third network element;
receiving, by the first network element, the energy consumption of the second network element for transmitting the data from the third network element.

6. The method according to claim 5, wherein the method further comprises:
sending, by the first network element, the data volume of the data to the third network element.

7. The method according to any one of claims 1 to 4, wherein the obtaining, by the first network element based on the index, the energy consumption used by the second network element to transmit the data comprises:
determining, by the first network element based on the relationship indicated by the index and the data volume of the data, energy consumption used by the second network element to transmit the data.

8. The method according to claim 6 or 7, wherein the response further comprises the data volume, and the query message is further used to query the data volume.

9. The method according to claim 6 or 7, wherein the method further comprises:
obtaining, by the first network element, the data volume based on the information about the first time period, wherein the data volume is a data volume of the data transmitted in the first time period by a session between the terminal device and the user plane network element; or the data volume is a data volume of the data transmitted by the second network element in the first time period, and the first time period corresponds to the index.

10. The method according to claim 9, wherein the response further includes information about the first time period, and the query message is further used to query the information about the first time period.

11. The method according to any one of claims 1 to 10, wherein the relationship indicated by the index is determined based on the index and a list corresponding to the second network element, and at least one index in the list corresponding to the second network element corresponds to the relationship.

12. The method according to any one of claims 1 to 11, wherein the query message comprises information used to indicate the terminal device.

13. The method according to any one of claims 1 to 12, wherein the method further comprises:
triggering, by the first network element, the policy control network element to update the policy related to data transmission based on the energy consumption of the second network element used for transmitting the data.

14. A communication method, comprising:
receiving, by a third network element, an index from the first network element, wherein the index indicates a relationship between the energy consumption of the second network element for transmitting the data and the data, wherein the data includes data related to a terminal device;
determining, by the third network element, based on the relationship indicated by the index, the energy consumption of the second network element for transmitting the data;
sending, by the third network element to the first network element, the energy consumption of the second network element for transmitting the data.

15. The method according to claim 14, wherein the determining, by the third network element, the energy consumption of the second network element for transmitting the data based on the relationship indicated by the index, comprises:
determining, by the third network element, based on the relationship indicated by the index and the data volume of the data, the energy consumption of the second network element for transmitting the data.

16. The method according to claim 15, wherein the relationship indicated by the index comprises the energy consumption of the second network element for transmitting each unit of the data.

17. The method according to claim 16, wherein the energy consumption of the second network element for transmitting the data is equal to a product of the data volume of the data and the energy consumption of the second network element for transmitting each unit of the data.

18. The method according to any one of claims 14 to 17, wherein the method further comprises:
receiving, by the third network element, the data volume of the data from the first network element, or receiving, by the third network element, the data volume of the data from the second network element, or receiving, by the third network element, the data volume of the data from a user plane network element.

19. The method according to any one of claims 14 to 18, wherein the method further comprises:
querying, by the third network element, based on the index, the list corresponding to the second network element to determine the relationship, wherein at least one index in the table corresponding to the second network element corresponds to the relationship.

20. The method according to claim 19, wherein the method further comprises:
receiving, by the third network element, the identifier of the second network element from the first network element;
obtaining, by the third network element, based on the identifier of the second network element, the list corresponding to the second network element.

21. A communication method, comprising:
receiving, by a second network element, a query message, wherein the query message is used to query the energy consumption information of the second network element for transmitting data, and the data includes data related to a terminal device;
sending, by the second network element, a response to the query message, wherein the response includes an index, and the index indicates a relationship between the energy consumption of the second network element for transmitting the data and the data.

22. The method according to claim 21, wherein the energy consumption of the second network element for transmitting the data is determined based on the relationship indicated by the index and the data volume of the data.

23. The method according to claim 22, wherein the relationship indicated by the index includes the energy consumption of the second network element for transmitting each unit of the data.

24. The method according to claim 23, wherein the energy consumption of the second network element for transmitting the data is equal to the product of the data volume of the data and the energy consumption of the second network element for transmitting each unit of the data.

25. The method according to any one of claims 21 to 24, wherein the response further includes the data volume, and the query message is further used to query the data volume; and/or
the response further includes information about a first time period, wherein the first time period corresponds to the index, and the query message is further used to query the information about the first time period.

26. The method according to any one of claims 21 to 25, wherein the query message comprises information used to indicate the terminal device.

27. The method according to any one of claims 21 to 26, wherein the relationship is used to update a policy related to data transmission;
the method further includes:
receiving, by the second network element, the updated policy, and performing data transmission according to the updated policy.

28. A communication apparatus, comprising a module configured to perform the method according to any one of claims 1-27.

29. A communication system, comprising a first network element and a second network element, wherein:
the first network element is configured to perform the method according to any one of claims 1 to 13; and
the second network element is configured to perform the method according to any one of claims 21 to 27.

30. A communication system, comprising a first network element and a third network element, wherein:
the third network element is configured to perform the method according to any one of claims 14 to 20;
the first network element is configured to send an index to the third network element;
the first network element is further configured to receive, from the third network element, the energy consumption of the second network element used for transmitting data.
